# EUROPEAN PATENT APPLICATION

(11) **EP 4 693 243 A1**
(43) Date of publication of application: **11.02.2026**
(21) Application number: 25194016.9
(22) Date of filing: 05.08.2025
(51) Int. Cl.: G08B 3/10, G08B 21/22

(54) **SOUND PLAYBACK DEVICE, SOUND PLAYBACK METHOD, AND SOUND PLAYBACK PROGRAM**

(30) Priority: 06.08.2024 JP 2024130490
(71) Applicant: Nintendo Co., Ltd., Kyoto 601-8501 (JP)
(72) Inventor: OSUGA, Seiya, Kyoto, 601-8501 (JP); ABE, Rui, Kyoto, 601-8501 (JP); KAKEMIZU, Hironori, Kyoto, 601-8501 (JP); TAKATORI, Junichi, Kyoto, 601-8501 (JP); MATSUDA, Yuki, Kyoto, 601-8501 (JP); KONDO, Masahiro, Kyoto, 601-8501 (JP); AKAMA, Tetsuya, Kyoto, 601-8501 (JP)
(74) Representative: Bardehle Pagenberg Partnerschaft mbB Patentanwälte Rechtsanwälte

(57) **Abstract**

A sound playback device includes: a sensor 21, output of which changes in accordance with a position or movement of an object in a detection area including a first area and a second area; a detection part 333 configured to detect a position of the object based on output of the sensor; a sound control part 335 configured to control playback of sound; and a determination part configured to determine whether a first condition is satisfied based on detection results which are different than a position of an object detected based on output of the sensor. The sound control part changes a sound playback manner when a second condition, including a position of an object detected in the first area becoming not detected in the first area and a position of an object being detected in the second area, becomes satisfied, and changes a sound playback manner based on satisfaction of a third condition including a position of an object detected in the first area becoming not detected in the detection area and the first condition being determined not to be satisfied.

## Description

### FIELD

The present disclosure relates to a sound playback device, a sound playback method, and a sound playback program.

### BACKGROUND AND SUMMARY

Conventionally, systems which issue a notification when a user is determined to have woken up are known. In particular, the user may be determined to have woken up when a given part of the user is detected in a wake-up area after a given part of the user is detected in a sleep area.

In the case where a user is detected in a specified area and then becomes undetectable, it may not be possible to appropriately determine whether the user has woken up.
(1) A sound playback device, comprising:
   a sensor, output of which changes in accordance with a position or movement of an object in a detection area including a first area and a second area;
   a detection part configured to detect a position of the object based on output of the sensor;
   a sound control part configured to control playback of sound; and
   a determination part configured to determine whether a first condition is satisfied based on detection results which are different than a position of an object detected based on output of the sensor, wherein
   the sound control part changes a sound playback manner when a second condition, including a position of an object detected in the first area becoming not detected in the first area and a position of an object being detected in the second area, becomes satisfied, and changes a sound playback manner based on satisfaction of a third condition including a position of an object detected in the first area becoming not detected in the detection area and the first condition being determined not to be satisfied.
(2) The sound playback device according to above (1), wherein the sound control part changes a sound playback manner without the determination part determining whether the first condition is satisfied, when the second condition becomes satisfied.
(3) The sound playback device according to above (1) or (2), further comprising a clock part configured to measure time, wherein the sound control part:
   plays a first sound when time measured by the clock part reaches a time determined in accordance with an alarm time set by a user; and
   stops the playback of the first sound when at least one of the second condition and the third condition is satisfied.
(4) The sound playback device according to any one of above (1) to (3), wherein the detection part detects, as a position of an object, a position where a first movement, which is a movement equal to or greater than an arbitrary magnitude, is detected based on output of the sensor.
(5) The sound playback device according to above (4), wherein when the third condition is satisfied after a first period of time has elapsed since a last detection of a position of the object, the sound control part does not change a sound playback manner even if the third condition is satisfied.
(6) The sound playback device according to above (4) or (5), wherein
   the detection part detects a presence or absence of a second movement which is smaller than the arbitrary magnitude based on output of the sensor, and
   the first condition is satisfied when presence of the second movement is detected.
(7) The sound playback device according to above (6), further comprising a clock part configured to measure time, wherein the sound control part:
   plays a first sound when time measured by the clock part reaches a time determined in accordance with an alarm time set by a user,
   stops playback of the first sound when at least one of the second condition and the third condition is satisfied,
   when playback of the first sound is stopped due to the third condition being satisfied, resumes playback of the first sound when the second movement is detected before a second period of time has elapsed from when playback of the first sound is stopped, and
   when playback of the first sound is stopped due to the second condition being satisfied, does not resume playback of the first sound even if the second movement is detected before a second period of time has elapsed from when playback of the first sound is stopped.
(8) The sound playback device according to above (7), wherein the sound control part does not resume playback of the first sound when the first movement is detected in the second area before the second period of time has elapsed from when playback of the first sound is stopped due to the third condition being satisfied.
(9) The sound playback device according to above (7) or (8), wherein the sound control part resumes playback of the first sound when the first movement is detected in the first area before the second period of time has elapsed from when playback of the first sound is stopped due to the third condition being satisfied.
(10)The sound playback device according to any one of above (7) to (9), wherein the determination part determines that the object has left the first area when the first movement and the second movement have not been detected until the second period of time has elapsed from when playback of the first sound is stopped due to the third condition being satisfied, and when the second condition is satisfied, and
   the sound control part resumes playback of the first sound when the first movement is detected in the first area until a third period of time has elapsed since playback of the first sound was started or since it was determined that the object has left the first area.
(11)The sound playback device according to above (10), wherein the sound control part resumes playback of the first sound when the first movement is detected in the first area before the third period of time has elapsed since it was determined that the object has left, and thereafter the first movement has not been detected for a fourth period of time or more without the second condition or the third condition being satisfied.
(12)The sound playback device according to any one of above (1) to (11), wherein the sound control part plays a second sound when at least one of a sound playback condition including the second condition being satisfied and a sound playback condition including the third condition being satisfied is satisfied.
(13)The sound playback device according to any one of above (1) to (11), wherein the sound control part:
   plays a second sound when a sound playback condition including the second condition being satisfied is satisfied, and
   plays a sound different from the second sound when a sound playback condition including the third condition being satisfied is satisfied.
(14)The sound playback device according to above (12) or (13), wherein the detection part detects, as a position of the object, a position where a first movement, which is a movement equal to or greater than an arbitrary magnitude, is detected based on output of the sensor, and detects a presence or absence of a second movement which is smaller than the arbitrary magnitude based on output of the sensor,
   the sound playback condition including the second condition being satisfied is a condition which is satisfied when the second condition is satisfied, and
   the sound playback condition including the third condition being satisfied is a condition which is satisfied when the third condition is satisfied and then the first movement and the second movement are not detected until a second period of time has elapsed.
(15)The sound playback device according to any one of above (1) to (11), further comprising a clock part configured to measure time, wherein
   the sound control part:
   plays a first sound when time measured by the clock part reaches a time determined in accordance with an alarm time set by a user,
   stops playback of the first sound when at least one of the second condition and the third condition is satisfied,
   plays a fourth sound when at least one of a sound playback condition including the second condition being satisfied and a sound playback condition including the third condition being satisfied is satisfied before a fifth period of time has elapsed from when the first sound was played, and
   plays a fifth sound which is different from the fourth sound when at least one of a sound playback condition including the second condition being satisfied and a sound playback condition including the third condition being satisfied is satisfied after the fifth period of time has elapsed from when the first sound was played.
(16) The sound playback device according to above (15), wherein the fourth sound has a longer playback time than the fifth sound.
(17)The sound playback device according to any one of above (1) to (16), further comprising
   a light-emitting part configured to emit light; and
   a light emission control part configured to control light emission of the light-emitting part, wherein
   the light emission control part changes a light emission manner of the light-emitting part when at least one of the second condition and the third condition is satisfied.
(18) The sound playback device according to above (17), wherein the light emission control part:
   changes a light emission manner of the light-emitting part to a first manner when the second condition is satisfied, and
   changes a light emission manner of the light-emitting part to a manner which is different from the first manner when the third condition is satisfied.
(19)A sound playback method, comprising:
   detecting a position of an object based on output of a sensor, output of which changes in accordance with the position or movement of the object in a detection area including a first area and a second area,
   determining whether a first condition is satisfied based on detection results different from a position of an object detected based on output of the sensor,
   changing a sound playback manner when a second condition, including a position of an object detected in the first area becoming not detected in the first area and a position of an object being detected in the second area, is satisfied, and changing a sound playback manner based on satisfaction of a third condition including a position of an object detected in the first area becoming not detected in the detection area and the first condition being determined not to be satisfied.
(20)A sound playback program, which causes a computer to execute the steps of:
   detecting a position of an object based on output of a sensor, output of which changes in accordance with the position or movement of the object in a detection area including a first area and a second area,
   determining whether a first condition is satisfied based on detection results different from a position of an object detected based on output of the sensor,
   changing a sound playback manner when a second condition including a position of an object detected in the first area becoming not detected in the first area and a position of an object being detected in the second area is satisfied, and changing a sound playback manner based on satisfaction of a third condition including a position of an object detected in the first area becoming not detected in the detection area and the first condition being determined not to be satisfied.

### BRIEF DESCRIPTION OF DRAWINGS

Embodiments of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a perspective view schematically showing a stationary device.
FIG. 2 is a block diagram schematically showing a construction of components of a stationary device.
FIG. 3 is a functional block diagram of a processor of a control part.
FIG. 4 is a view schematically showing a detection range of an object sensor when a stationary device is installed next to a bed on which a user sleeps.
FIG. 5 is a view schematically showing transitions in state and operation of a stationary device during reached timing processing.
FIG. 6 is a time chart showing movements detected by a detection part and sound played by a sound control part.
FIG. 7 is a time chart showing movements detected by the detection part and sounds played by the sound control part.
FIG. 8 is a time chart showing movements detected by the detection part and sounds played by the sound control part.
FIG. 9 is a flowchart schematically showing a flow of a sound playback processing.
FIG. 10 is a flowchart schematically showing a flow of reached timing processing.
FIG. 11 is a time chart showing an execution status of image generation processing, time signal playback processing, and light emission processing.
FIG. 12 is a view similar to FIG. 4, schematically showing a detection area by an object sensor when the stationary device is installed next to a bed.
FIGS. 13A to 13E are views showing states in which an image generated by an image generation part in the image generation processing is displayed on a display.
FIG. 14 is a flowchart schematically showing a flow of execution processing for executing the image generation processing, time signal playback processing, and light emission processing.
FIG. 15 is a flowchart schematically showing a flow of sensor response image generation processing.
FIG. 16 is a time chart of operations of a sound control part, and the like, and detection status during execution of check control processing.
FIG. 17 is a time chart of operations of a sound control part, and the like, and detection status during execution of the check control processing.
FIGS. 18A to 18C are views showing examples of images related to a detection status of an object.
FIG. 19 is a view schematically showing the flow of image generation by the image generation part in the check control processing.
FIG. 20 is a flowchart showing a flow of state check processing.

### DESCRIPTION OF EMBODIMENTS

Embodiments will be described in detail below with reference to the drawings. In the following description, identical constituent elements have been assigned the same reference signs.

### Overall Configuration

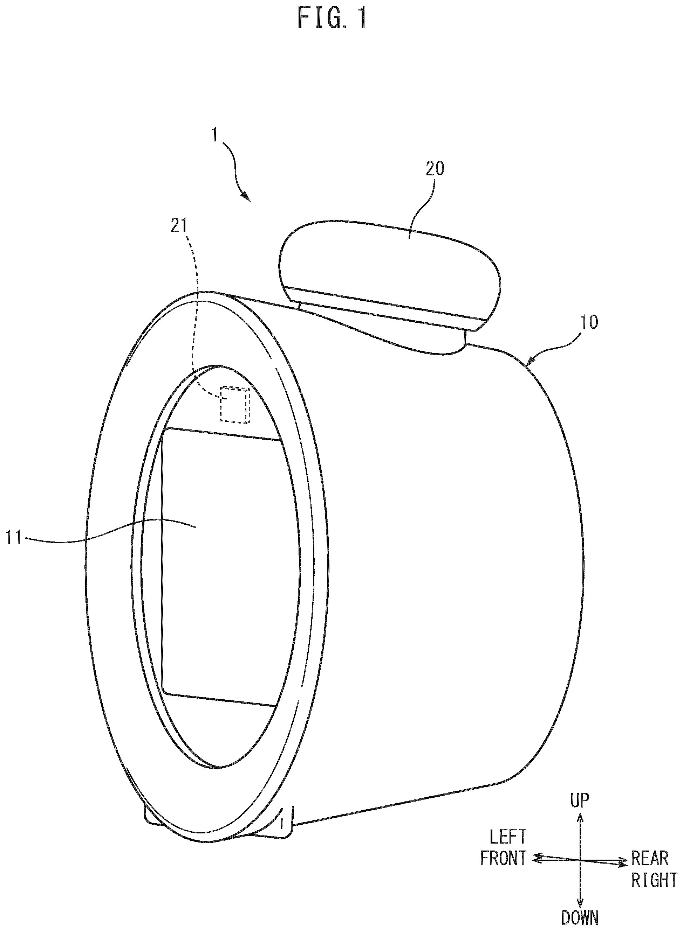

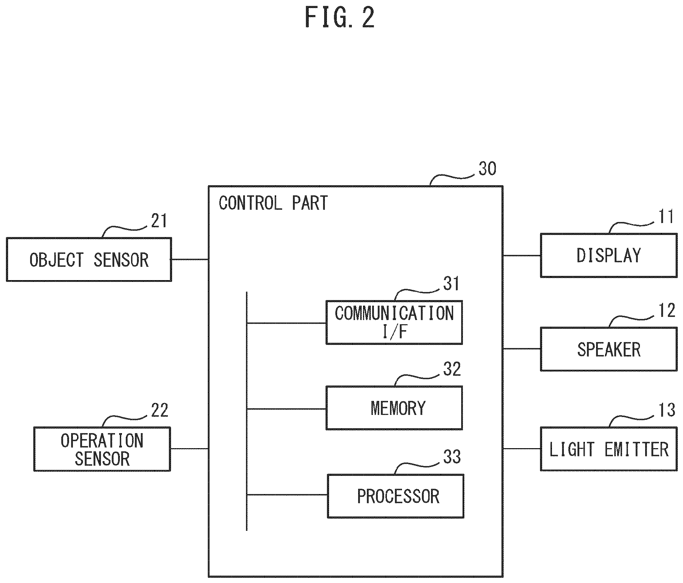

The configuration of a stationary device 1 in accordance with an embodiment will be described with reference to FIGS. 1 and 2. The stationary device 1 is a portable device which is arranged on an installation surface such as a table, a floor, a shelf, or a headboard of a bed (bedding). The stationary device 1 also functions as a sound playback device for outputting sound, and in particular, functions as an alarm playback device for playing alarm sound. In particular, in the present embodiment, the stationary device 1 functions as an alarm clock for waking up a user who is sleeping in front of the stationary device 1. Specifically, the stationary device 1 is, for example, a desk clock, a music player, a television, a game device, a smartphone, a tablet PC, or a monitor device.

FIG. 1 is a perspective view schematically showing the stationary device 1. As shown in FIG. 1, the stationary device 1 includes a body 10, a display 11 which is provided on the body 10, and an operation part 20 which is provided on the upper part of the body 10. In the present embodiment, as shown in FIG. 1, the body 10 is configured as a cylindrical housing. However, the body 10 can be formed into any three-dimensional shape, such as a rectangular parallelepiped shape or a semi-cylindrical shape.

The display 11 is arranged on the front surface of the body 10 so as to be visible by a user from the front. For example, the current time is displayed on the display 11. The current time is displayed in any display mode, such as numbers, hour and minute hands, or an image corresponding to the current time. Note that the stationary device 1 need not include the display 11, and may include, for example, hands such as hour and minute hands and a dial, as long as the user can recognize the current time and an alarm time, which is described later.

The operation part 20 is a member with which the user operates various functions of the stationary device 1. In the present embodiment, the operation part 20 is a substantially cylindrical member provided on the top part of the body 10. The operation part 20 is attached so as to be capable of being pushed toward the body 10 and so as to be rotatable. When the user pushes the operation part 20 toward the body 10 or rotates it relative to the body 10, various functions of the stationary device 1 are operated. Any member may be provided as the operation part 20 as long as the various functions of the stationary device 1 can be operated therewith. Thus, the operation part 20 may be, for example, a button, a switch, a cross key, a touch panel arranged on the screen of the display 11, or the like. Furthermore, the operation part 20 also operates various functions of the stationary device 1 when an operation other than the operation of pushing and rotating by the user (for example, an operation of tilting the operation part or touching the operation part) is performed.

FIG. 2 is a block diagram schematically showing a construction of components of the stationary device 1. As shown in FIG. 2, the stationary device 1 includes a display 11, a speaker 12, a light emitter 13, an object sensor 21, an operation sensor 22, and a control part 30. The display 11, the speaker 12, the light emitter 13, the object sensor 21, and the operation sensor 22 are electrically connected to the control part 30 via signal lines. Furthermore, the stationary device 1 further includes a battery (not shown) for supplying power to the display 11, the light emitter 13, the control part 30, and the like. Though the display 11, the speaker 12, the light emitter 13, the object sensor 21, the operation sensor 22, and the control part 30 are housed in the body 10 in the present embodiment, some of them may not be housed in the body 10.

The display 11 is an example of a display part for displaying an image. The display 11 is arranged in the front of the stationary device 1. The display 11 is electrically connected to the control part 30 and is a device for displaying an image in accordance with an image signal from the control part 30. The display 11 displays an image in accordance with a computer program executed by the control part 30. The display 11 is, for example, a liquid crystal display, an EL (Electro Luminescence) display, or a plasma display. Note that the display part need not be provided in the stationary device 1.

The speaker 12 is an example of a sound generator for generating sound. The speaker 12 is electrically connected to the control part 30 and generates sound in accordance with a sound signal from the control part 30. The speaker 12 generates sound in accordance with the computer program being executed by the control part 30.

The light emitter 13 is an example of a light-emitting part for emitting light. The light emitter 13 is electrically connected to the control part 30 and emits light in accordance with a light emission signal from the control part 30. The light emitter 13 is, for example, an LED (Light-Emitting Diode). However, the light emitter 13 may be another device such as a light bulb as long as it emits light. The light emitter 13 may be configured to emit light in a single color, or may be configured to emit light in a plurality of colors. In the present embodiment, the light emitter 13 is arranged inside the operation part 20. In particular, the light emitter 13 is arranged so that when it emits light, the operation part 20, which is formed of a material which diffuses light, appears to emit light as a whole. In this manner, since the light emitter 13 makes the operation part 20 provided on the top of the stationary device 1 appear to emit light, a user who cannot see the display 11 can see the light emitted by the light emitter 13. However, the light emitter 13 may be arranged in a location different from the operation part 20 of the stationary device 1.

The object sensor 21 is a sensor the output of which changes in response to the position or movement of an object within a detection area around the object sensor 21 (i.e., around the stationary device 1). The output of the object sensor 21 changes in response to the distance to the object within the detection area, the direction in which the object is positioned relative to the object sensor 21, and the movement of the object within the detection area. Thus, the control part 30 can detect the distance to the object within the detection area, the direction in which the object is positioned relative to the object sensor 21, and the movement of the object within the detection area based on the output of the object sensor 21. Note that the detection area includes a bed-entering determination area (first area), a bed-exit determination area (second area), and a response motion display area, which will be described later.

In the present embodiment, the object sensor 21 is arranged in the front of the body 10 such that the output changes in accordance with the position or the like of the object in the detection area in front of the stationary device 1. The object sensor 21 outputs output signal representing, for example, the position or movement of the object in the detection area. The output signal from the object sensor 21 is input to the control part 30.

In the present embodiment, the object sensor 21 is a millimeter wave sensor. The millimeter wave sensor transmits millimeter wave radio signals from a transmission antenna, receives reflected signals reflected by surrounding objects with a reception antenna, and outputs output signals based on the transmitted radio signals and the received reflected signals. In the present embodiment, the millimeter wave sensor combines the transmitted radio signal with the received reflected signal and performs processing such as Fourier transform to output output signals which change in accordance with the distance from the millimeter wave sensor to the object. In the present embodiment, the millimeter wave sensor includes a plurality of transmission antennas and reception antennas, and outputs output signals which change in accordance with the distance from each of the transmission antennas and reception antennas to the object. Thus, when the direction of the object relative to the millimeter wave sensor is different, the output signal, which changes between the different antennas in accordance with the distance to the object, also changes. Thus, the millimeter wave sensor can be said to output output signals which change in accordance with the direction in which the object is positioned relative to the millimeter wave sensor. Furthermore, the output signals of the millimeter wave sensor change when the distance to the object changes, and also when the direction in which the object is positioned relative to the millimeter wave sensor changes. Thus, when the object moves, the millimeter wave sensor outputs output signals which change in accordance with the movement of the object.

Note that sensors other than a millimeter wave sensor, such as an infrared sensor, an ultrasonic sensor, or a microwave sensor, may be used as the object sensor 21 as long as they can detect the distance to the object, the direction in which the object is positioned, and the movement of the object in a non-contact manner. Furthermore, as long as the object in the detection area can be detected in a non-contact manner, other types of sensors, such as a temperature sensor, may be used in place of the object sensor 21.

The operation sensor 22 is an example of an operation detection part for detecting an operation performed by the user with the operation part 20. In the present embodiment, when the operation part 20 is pressed by the user, the operation sensor 22 outputs output signal indicating that the operation part 20 has been pressed. When the operation part 20 is rotated by the user, the operation sensor 22 outputs output signal indicating the angle by which the operation part 20 has been rotated. The output signal from the operation sensor 22 is input to the control part 30.

The operation sensor 22 is a sensor corresponding to the type of the operation part 20. For example, when a button is used as the operation part 20, a sensor, the output signal of which changes depending on whether the button is pressed, is used as the operation sensor 22. When a touch panel is used as the operation part 20, a sensor for outputting output signal indicating the position of a finger touch is used as the operation sensor 22.

### Configuration and Operation of Control Part

Next, the configuration and operation of the control part 30 will be described with reference to FIGS. 2 to 4. The control part 30 transmits control signals to the display 11, the speaker 12, the light emitter 13, etc., in accordance with a running computer program, based on signals received from the object sensor 21 and the operation sensor 22. The control part 30 includes a communication interface 31, a memory 32, and a processor 33. The communication interface 31, the memory 32, and the processor 33 may be separate circuits, or may be configured as a single integrated circuit.

The communication interface 31 is a circuit for connecting the control part 30 to other electronic parts in the body 10, specifically, the display 11, the speaker 12, the object sensor 21, and the operation sensor 22.

The memory 32 is an example of a storage unit for storing data. The memory 32 is a storage medium for storing data, and includes, for example, a volatile semiconductor memory or a nonvolatile semiconductor memory. Furthermore, the memory 32 may include a removable medium such as a memory card or an optical disk. The memory 32 stores computer programs executed by the processor 33. The memory 32 also stores various data used by the running program, such as the output signal of the object sensor 21, etc.

Furthermore, the memory 32 stores data of the sound to be played by the control part 30. Thus, the processor 33 obtains data of the sound to be played from the memory 32 and plays the sound based on the obtained data, thereby outputting the sound from the speaker 12.

In the present embodiment, the memory 32 stores a plurality of sets, a plurality of different sounds (including an alarm sound, a bed-exit sound, and a sleep-introducing sound, which will be described later), and a plurality of different images of characters, etc. The memory 32 also stores these sounds and images to be displayed on the display 11 in association with each set. Thus, each set is associated with an alarm sound different from other sets, a bed-exit sound different from other sets, a sleep-introducing sound different from other sets, and an image of a character, etc., different from other sets.

Specifically, for example, the plurality of sets correspond to a plurality of different games, and sounds and images related to each game are stored in the memory 32 in association with the corresponding set. For example, the background music of a game corresponding to a certain set is associated with the set as an alarm sound, and a sound effect of the game when a stage is cleared is associated with the set as a bed-exit sound. Furthermore, the image of a character of the game or an image of an object such as an item used in the game is associated with the set. Note that some or all of the plurality of sets may correspond to one game. In this case, a plurality of different sets corresponding to the same game may include partially identical sounds or images.

It is not necessary that the memory 32 store sets. In this case, the memory 32 stores a plurality of different sounds (including an alarm sound, a bed-exit sound, and a sleep-inducing sound, which will be described later) and a plurality of different character images, regardless of the set.

Furthermore, in the present embodiment, the memory 32 stores various settings by the user. For example, the memory 32 stores a scheduled bedtime and an alarm time set by the user. The memory 32 also stores a set selected by the user from among the sets stored in the memory 32 described above.

Furthermore, the memory 32 stores information regarding an area in which a bed (bedding) B in which the user sleeps is located. The memory 32 stores, for example, the area in which the bed B is located, the relative positional relationship of the stationary device 1 relative to the bed B, the distance from the stationary device 1 to the bed B, and the size of the bed B.

The processor 33 includes one or more central processing units (CPUs) and peripheral circuits therefor. The processor 33 may further include other arithmetic circuits such as a logic unit or a numerical operation unit. The processor 33 executes various processing based on the computer programs stored in the memory 32. For example, the processor 33 executes control processing for the display 11, the speaker 12, and the light emitter 13, and outputs control signals to the display 11, the speaker 12, and the light emitter 13. Thus, the processor 33 controls the image displayed on the display 11, plays sound, and controls the emission of light from the light emitter 13.

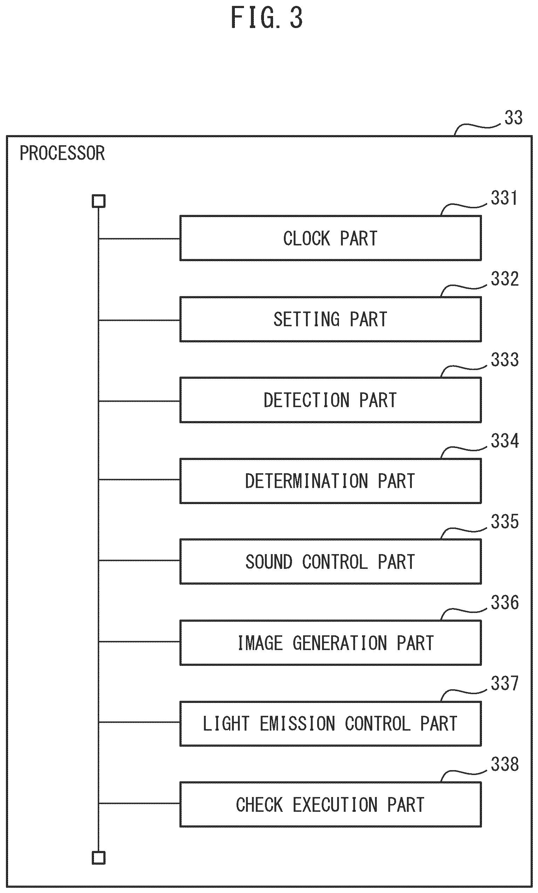

FIG. 3 is a functional block diagram of the processor 33 of the control part 30. As shown in FIG. 3, the processor 33 includes a clock part 331, a setting part 332, a detection part 333, a determination part 334, a sound control part 335, an image generation part 336, a light emission control part 337, and a check execution part 338. Each of these parts of the processor 33 is, for example, a functional module realized by a computer program operated by the processor 33. Alternatively, each part of the processor 33 may be implemented in the control part 30 as an independent integrated circuit, microprocessor, or firmware.

The clock part 331 measures time. For example, the clock part 331 measures time by counting a signal output from a circuit which oscillates at a predetermined cycle and adding it to the initial time. The time measured by the clock part 331 (hereinafter also referred to as "measured time") basically represents the current time. The clock part 331 may have a function of correcting the measured time based on a standard radio wave representing standard time received by, for example, a receiver (not shown). The measured time is displayed on the display 11.

The setting part 332 performs the setting necessary for the operation of the stationary device 1. In the present embodiment, the setting part 332 performs the setting of various items based on input by the user via the operation part 20. In particular, in the present embodiment, the setting part 332 performs setting related to time, setting related to the area around the stationary device 1, and setting related to the type of sound to be played and image to be displayed on the display. The items set by the setting part 332 are stored in the memory 32.

Specifically, the setting part 332 sets the scheduled bedtime, which is the time when the user goes to bed, and the alarm time, which is the time when the user should wake up. The scheduled bedtime and alarm time are times that are set by the user inputting the respective times via the operation part 20.

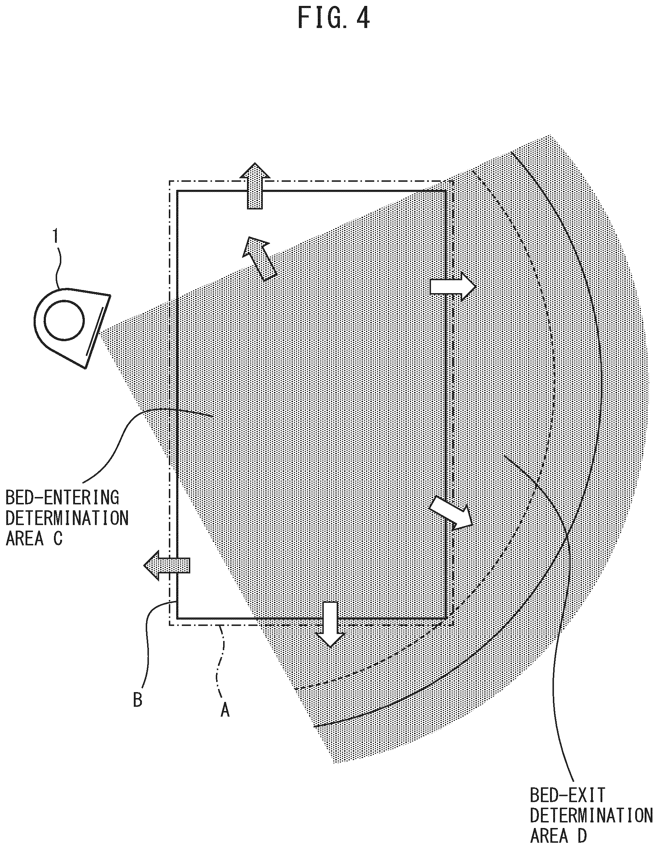

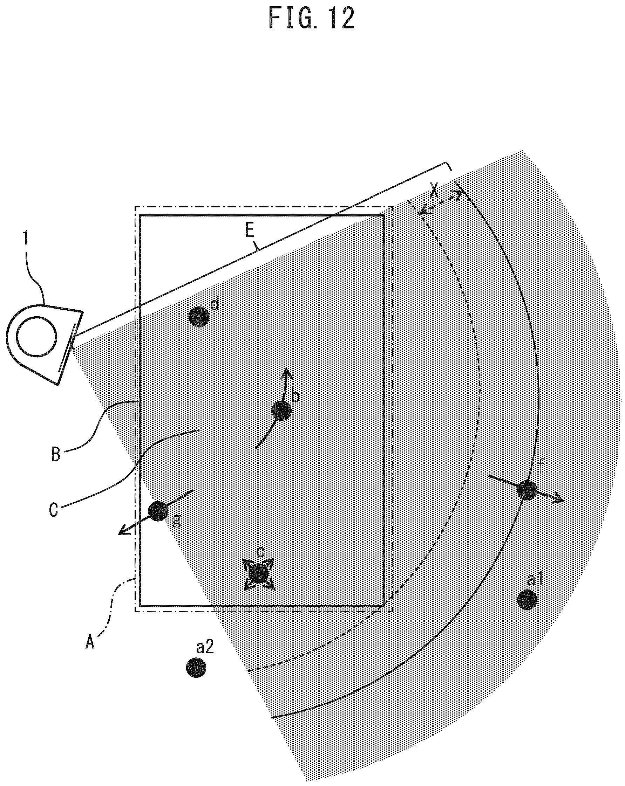

The setting part 332 also sets a sleeping area A where the user is positioned while asleep, an area where the bed B is positioned, and a response motion display area E (refer to FIGS. 4 and 12). The area where the bed B is positioned is set by the user inputting, for example, the relative positional relationship of the stationary device 1 relative to the bed B, the distance from the stationary device 1 to the bed B, and the size of the bed B via the operation part 20. When the setting part 332 has the user input the relative positional relationship, etc., the user is first guided to arrange the stationary device 1 so that the front surface of the stationary device 1 faces the center of the bed B. Such guidance is displayed on the display 11 or output by voice from the speaker 12. Next, the setting part 332 guides the user to input the relative position where the stationary device 1 is arranged relative to the bed B, and the distance from the stationary device 1 to the edge of the bed B. Furthermore, the setting part 332 may guide the user to input the orientation of the front surface of the stationary device 1 relative to the bed B (for example, the front surface of the stationary device 1 faces the center of the bed B) as the relative positional relationship of the stationary device 1 relative to the bed B.

The relative positional relationship, the distance to the bed B, and the size of the bed B input by the user are stored in the memory 32. Furthermore, the area where the bed B is positioned, set by the setting part 332, may also be stored in the memory 32. The setting part 332 may set the area where the bed B is positioned based by other means (for example, the output of the object sensor 21) rather than by means of the input by the user via the operation part 20. For example, the setting part 332 may have the user turn over on the bed B, and set an area in which a large movement ("large movement" will be described later) is detected by the detection part 333 based on the output of the object sensor 21 at this time, as the area where the bed B is positioned.

The sleeping area A is an area for determining that the user is positioned in the bed B when movement by the user is detected in that area. Thus, in the present embodiment, the sleeping area A is set as an area larger than the area where the bed B is positioned so that the user is determined to be positioned in the bed B even if a part of the user (such as a hand or a foot) is slightly outside the bed B during sleep. The sleeping area A may be set as the same area as the area where the bed B is positioned, or may be set as an area smaller than the area where the bed B is positioned.

When movement by the user is detected within the response motion display area E, an image which changes in accordance with the detection results is generated. In the present embodiment, the response motion display area E is an area that is wider by a predetermined distance X (for example, 20 cm) than the distance from the stationary device 1 (object sensor 21) to the farthest position in the area in which the bed B is positioned (the distance shown by the arc-shaped dashed line in FIG. 12). Thus, the response motion display area E is an area that is within the detection range of the object sensor 21 and includes an area (bed-entering determination area) in the sleeping area A. Since an image which changes based on the detection results of movement by the user in an area wider than the area where the bed B is positioned is generated in this manner, it is possible to suppress, for example, a case where movement by the user before going to bed or after getting out of bed is not detected even though the user is moving near the bed B, and as a result, an image in accordance with the detection results is not generated. Furthermore, the response motion display area E may be set to the same area as the bed-entering determination area C.

Furthermore, the setting part 332 sets a baseline movement level, which will be described later, based on user input. As a result, the user can adjust the magnitude of the movement detected by the detection part 333 as a movement equal to or greater than the baseline movement level.

Furthermore, the setting part 332 sets a set selected by the user from among the plurality of sets stored in the memory 32. The set is set when the user selects one of the plurality of sets via the operation part 20.

When the set selected by the user is set by the setting part 332, the sound control part 335 plays sounds (including an alarm sound, a bed-exit sound, and a sleep-introducing sound, which will be described later) in accordance with the set that has been set. When the alarm sound should be played, the sound control part 335 plays the alarm sound associated with the set selected by the user. Furthermore, when the bed-exit sound should be played, the sound control part 335 plays the bed-exit sound associated with the set selected by the user. Furthermore, when the sleep-introducing sound should be played, the sound control part 335 plays the sleep-introducing sound associated with the set selected by the user. Thus, the sound control part 335 plays sounds among a plurality of different sounds based on the selection made by the user. Furthermore, when the set selected by the user is set by the setting part 332, the image generation part 336 generates a character image or an object image in accordance with the set that has been set, when a character image or an object image such as a car should be generated. As a result, sounds can be played in accordance with the preference of the user, and character images or object images can be generated in accordance with the preference of the user.

The setting part 332 may set a sound or image selected by the user from among a plurality of different sounds stored in the memory 32, rather than setting a set related to sound. In this case, for example, the setting part 332 sets one alarm sound selected by the user from among a plurality of alarm sounds as the alarm sound to be played when the alarm sound should be played. Likewise, the setting part 332 sets one bed-exit sound selected by the user from among a plurality of bed-exit sounds as the bed-exit sound to be played when the bed-exit sound should be played. The setting part 332 also sets one sleep-inducing sound selected by the user from among a plurality of sleep-inducing sounds as the sleep-inducing sound to be played when the sleep-inducing sound should be played. As a result, the sound control part 335 plays the alarm sound, bed-exit sound, and the sleep-inducing sound selected by the user, and thus, sounds in accordance with the preference of the user are played.

The detection part 333 performs detection based on the output of the object sensor 21. In the present embodiment, the detection part 333 detects an object around the stationary device 1 (and in particular, around the object sensor 21) based on the output of the object sensor 21. In particular, in the present embodiment, the detection part 333 detects the position or movement of an object in the detection area of the object sensor 21 based on the output of the object sensor 21. Since the output of the object sensor 21 changes in accordance with the position or movement of an object in the detection area as described above, the detection part 333 can detect the position or movement of an object based on the output of the object sensor 21.

FIG. 4 is a view schematically showing a detection area by the object sensor 21 when the stationary device 1 is installed next to the bed B where the user sleeps. In the example shown in FIG. 4, the stationary device 1 is installed next to the bed B such that the front surface thereof faces the center of the bed B. In FIG. 4, the detection area by the object sensor 21 is shown in gray, and the output of the object sensor 21 changes in accordance with the position or movement of the object in this detection area. As shown in FIG. 4, the detection area by the object sensor 21 extends to a certain angular range. Furthermore, the detection area by the object sensor 21 extends to a distance from the object sensor 21 that is sufficiently larger than the size of a typical bed B. Thus, the object sensor 21 can perform detection up to a distance beyond the bed B within this angular range.

Note that within the angular range of the detection area shown in FIG. 4, the position of an object can be detected more accurately in a narrower range within the certain angular range described above than in a range wider than the certain angular range. In this manner, the range in which the position of an object can be detected more accurately may be set as the angular range (detection area) in which detection is performed by the object sensor 21. Furthermore, an area within a predetermined lower limit distance (for example, 15 cm) from the object sensor 21 may be set as an invalid area in which object detection is not performed.

In the present embodiment, the detection part 333 detects a large movement (first movement) equal to or greater than a predetermined magnitude (hereinafter referred to as "baseline movement level") and the position thereof based on the output of the object sensor 21. The baseline movement level is, for example, the magnitude of the object movement detected by the detection part 333 when the user makes a movement equal to or greater than a predetermined magnitude (for example, sitting up, turning over in bed, moving arms and legs, etc.). Conversely, the baseline movement level is greater than the magnitude of the movement detected by the detection part 333 when there is chest movement due, for example, to the breathing of the user. Thus, when there is only chest movement due to breathing while the user is resting on the bed within the detection area of the object sensor 21, the detection part 333 does not detect a large movement.

The detection part 333 may detect the position where the large movement is detected as the position of the object based on the output of the object sensor 21. The object sensor 21 outputs output signal indicating that an object is present at a position even when an object other than the user is positioned within the detection area. Thus, by detecting the position where a large movement is detected as the position of the object, detection of an object other than the user as the user can be suppressed.

Furthermore, when a large movement is detected based on the output of the object sensor 21, in some cases, the detection part 333 can detect the distance from the object sensor 21 to the location where the large movement is detected, but cannot detect the direction of the location where the large movement is detected relative to the object sensor 21. In this case, the detection part 333 detect the distance to the location where the large movement is detected. Thus, in such cases, the detection part 333 detects the distance to the large movement, rather than the position of the large movement.

Furthermore, in the present embodiment, the detection part 333 detects the presence or absence of a small movement (second movement) below the baseline movement level, based on the output of the object sensor 21. The small movement includes, for example, a movement detected by the detection part 333 when there is chest movement caused by breathing of the user. Thus, when there is only chest movement caused by breathing while the user is resting on the bed within the detection area of the object sensor 21, the small movement is detected by the detection part 333. Note that, in the present embodiment, the small movement can be detected in an area relatively close to the object sensor 21 among the detection areas of the object sensor 21. Thus, the small movement cannot be detected in an area far from the object sensor 21 among the detection areas of the object sensor 21. Thus, when the small movement is detected by the detection part 333, it is presumed that the user is present on the bed B positioned near the object sensor 21.

In the present embodiment, the detection part 333 is provided in a processor 33 of the control part 30 separate from the object sensor 21. Thus, the processor 33 detects the position or movement of the object based on the output of the object sensor 21. However, a processor may also be provided in the object sensor 21, and the detection part 333 may be provided in the processor provided in the object sensor 21. In this case, the position or movement of the object is detected in the object sensor 21, and detection results such as the position of the object are transmitted to the processor 33 of the control part 30.

The determination part 334 determines whether any condition is satisfied based on the detection results by the detection part 333. In the present embodiment, the determination part 334 determines whether, for example, an in-area presence condition, an outside-area presence condition, a presence presumption condition, or an absence presumption condition is satisfied based on the detection results by the detection part 333.

The in-area presence condition is a condition which is satisfied when it is confirmed that the user is on the bed B (for example, asleep). In the present embodiment, the in-area presence condition is satisfied when the position of the object is detected an area (hereinafter referred to as the "bed-entering determination area", first area) C that is within the detection range of the object sensor 21 and within the sleeping area A. In particular, in the present embodiment, the determination part 334 determines that the in-area presence condition is satisfied when the detection part 333 detects a large movement within the bed-entering determination area C, and the object which was present at the position where the large movement was detected continues to be detected within the bed-entering determination area C thereafter. The determination part 334 may determine that the in-area presence condition is satisfied when the detection part 333 detects a large movement within the bed-entering determination area C and until other conditions such as the outside-area presence condition are satisfied thereafter.

The outside-area presence condition is a condition which is satisfied when it is confirmed that the user is outside the bed B. In the present embodiment, the outside-area presence condition is satisfied when the position of the object is detected within an area (hereinafter referred to as the "bed-exit determination area"; second area) D that is within the detection range of the object sensor 21 and outside the sleeping area A. In particular, in the present embodiment, the determination part 334 determines that the outside-area presence condition is satisfied when the detection part 333 detects a large movement within the bed-exit determination area D, and the object which was present in the position where the large movement was detected continues to be detected within the bed-exit determination area D thereafter. Note that the determination part 334 may determine that the outside-area presence condition is satisfied when the detection part 333 detects a large movement within the bed-exit determination area D and until other conditions such as the in-area presence condition are satisfied thereafter. Furthermore, the bed-exit determination area D may be an area that is within the detection range of object sensor 21 and within a predetermined upper limit distance from the object sensor 21 (for example, 3.5 m), and outside the sleeping area A.

The presence presumption condition is a condition which is satisfied when it is presumed that the user is on the bed B (for example, asleep). In the present embodiment, the presence presumption condition is a condition which is satisfied when the detection part 333 detects a small movement in the bed-entering determination area C without detecting a large movement, or when the detection part 333 detects a small movement in the bed-exit determination area D without detecting a large movement. The absence presumption condition is a condition which is satisfied when it is presumed that the user is not in the bed B. In the present embodiment, the absence presumption condition is a condition which is satisfied when the detection part 333 detects that neither a large movement nor a small movement is present.

When the in-area presence condition or the presence presumption condition is satisfied, it is confirmed or presumed that the user is on the bed B. Thus, the satisfaction of either the in-area presence condition or the presence presumption condition indicates that the user is on the bed B, and means that the presence condition that is satisfied when the user is on the bed B is satisfied. Likewise, when the outside-area presence condition or the absence presumption condition is satisfied, it indicates that the user is not on the bed B. Thus, the satisfaction of either the outside-area presence condition or the absence presumption condition indicates that the absence condition that is satisfied when the user is not on the bed B is satisfied.

The determination part 334 determines whether a bed-exit condition in which the user has left the bed B is satisfied, and specifically, whether the object has left the bed-entering determination area C. In the present embodiment, the determination part 334 determines that the bed-exit condition is satisfied when, after the in-area presence condition is determined to be satisfied, the in-area presence condition is determined to be no longer satisfied and the outside-area presence condition is determined to be satisfied. Thus, the determination part 334 determines that the bed-exit condition is satisfied when the position of the object which was detected in the bed-entering determination area C is no longer detected in the bed-entering determination area C and the position of the object is detected in the bed-exit determination area D. The determination part 334 may determine that the bed-exit condition is satisfied when a movement from the bed-entering determination area C to the outside of the bed-entering determination area C is detected based on the output of the object sensor 21.

Additionally, in the present embodiment, the determination part 334 determines that the bed-exit condition is satisfied when, after the in-area presence condition was determined to be satisfied, the in-area presence condition is no longer satisfied and a predetermined waiting time (second period of time) has elapsed since the absence presumption condition was satisfied. Thus, the determination part 334 determines that the bed-exit condition is satisfied when the position of the object detected in the bed-entering determination area C is no longer detected in the detection area and the detection part 333 has not detected a small movement for a certain period of time.

The sound control part 335 controls the playing of sounds. When the playing of sounds is controlled by the sound control part 335, the sounds are output from the speaker 12 accordingly. In the present embodiment, the sound control part 335 plays at least the alarm sound, the bed-exit sound, the sleep-inducing sound, and a time signal sound. Specific control of the playing of sounds by the sound control part 335 will be described later.

The alarm sound is a sound that is played when the measured time reaches the alarm time set by the setting part 332 (or another time determined in accordance with the alarm time). The alarm sound is a sound effect and/or music. For example, the alarm sound is background music or the sound of footsteps of a character when walking or running in an arbitrary game.

Furthermore, the bed-exit sound is a sound that is played when the user leaves the bed B. The bed-exit sound is, for example, a sound effect. In particular, the bed-exit sound is a sound effect (including a voice message) that is played when something is accomplished. The bed-exit sound is, for example, a sound effect that is played when an arbitrary stage is cleared in an arbitrary game. Specifically, the bed-exit sound is, for example, a sound effect such as fanfare. The bed-exit sound may be music.

The sleep-inducing sound is a sound that encourages the user to go to sleep, and is played when the measured time reaches the scheduled bedtime set by the setting part 332 (or another time determined in accordance with the scheduled bedtime). Alternatively, the sleep-inducing sound may be a sound that is played when the measured time reaches the scheduled bedtime and the detection part 333 detects that an object is positioned in the bed-entering determination area C. In this case, the sleep-inducing sound is not played when the measured time reaches the scheduled bedtime but the object is not detected to be positioned in the bed-entering determination area C. The sleep-inducing sound is, for example, a sound effect. In particular, the sleep-inducing sound is a sound effect such as white noise that encourages the user to go to sleep.

The time signal sound is a sound that notifies the user of the time, and is played when the time measured by the clock part 331 reaches a preset time. The time signal sound is, for example, a sound effect that indicates the current time. Specifically, the time signal sound may be a sound that is repeated a number of times in accordance with the time (for example, a bell that is repeated five times for 5 o'clock), or a voice that reads out the time.

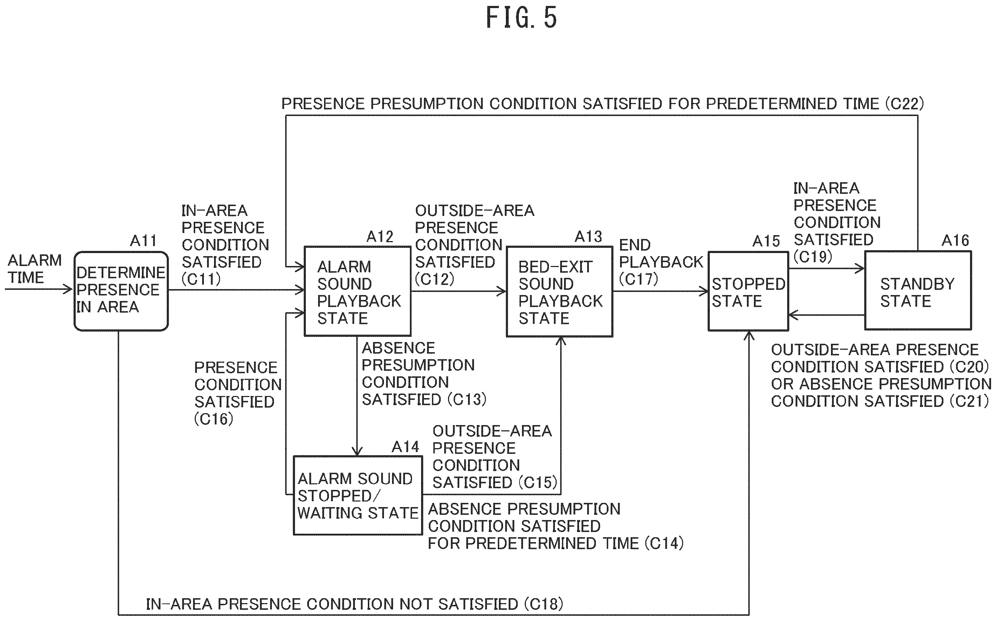

The image generation part 336 generates an image. In the present embodiment, the image generated by the image generation part 336 is displayed on the display 11. In the present embodiment, the stationary device 1 functions as a clock, and thus, generates an image including an image related to the time measured by the clock part 331 (time, date, day of the week, etc.). Furthermore, in the present embodiment, the image generation part 336 generates an image in accordance with the state of the stationary device 1 (refer to FIG. 5). Furthermore, in the present embodiment, the image generation part 336 generates an image in accordance with the output of the object sensor 21. Furthermore, the image generation part 336 generates an image in accordance with check control processing during execution of the check control processing, which will be described later. Details of the image generated by the image generation part 336 will be described later.

Furthermore, in cases in which the stationary device 1 is not provided with the display 11, the image generated by the image generation part 336 may be displayed on a display of an external device. In this case, the stationary device 1 includes a communication module, and the image generated by the image generation part 336 is transmitted to the external device via this communication module. In this case, the image generated by the image generation part 336 is displayed on the display of the external device.

The light emission control part 337 controls the light emission of the light emitter 13. The light emission control part 337 turns on, blinks, or turns off the light emitter 13. In the present embodiment, the light emission control part 337 can switch the emission color of the light emitter 13, or turn on the light emitter 13 in a plurality of colors. Details of the light emission control of the light emitter 13 by the light emission control part 337 will be described later.

The check execution part 338 executes the state check processing for determining whether the detection state is a normal state. In the present embodiment, the check execution part 338 determines the detection state to be a normal state when a normality determination condition, including the presence condition not being satisfied, is satisfied in the state check processing, and determines the detection state to be an abnormal state when the normality determination condition is not satisfied. Details of the state check processing by the check execution part 338 will be described later.

### Reached Timing Processing

### <<State Transition in Reached Timing Processing >>

Next, with reference to FIGS. 5 to 10, the reached timing processing will be described. The reached timing processing is processing which is performed by the processor 33 when the time (measured time) measured by the clock part 331 reaches a time determined in accordance with the alarm time. First, with reference to FIG. 5, the transitions in state and operation of the stationary device 1 in the reached timing processing will be described. FIG. 5 is a view schematically showing transitions in state and operation of the stationary device 1 during the reached timing processing. In particular, FIG. 5 shows the transition of the sound control state by the sound control part 335 and the control state of the light emitter 13 by the light emission control part 337. In FIG. 5, a rectangle indicates the state of the stationary device 1, and a square with rounded corners indicates the operation of the stationary device 1.

In the reached timing processing, when the measured time reaches a time determined in accordance with the alarm time, a determination is made by the determination part 334. The time determined in accordance with the alarm time may be the alarm time, a time a predetermined time before the alarm time, or a time a predetermined time after the alarm time.

When the measured time reaches a time determined in accordance with the alarm time, the determination part 334 determines whether the in-area presence condition is satisfied (A11). Specifically, the determination part 334 determines whether the detection part 333 has detected an object positioned in the bed-entering determination area C, and in particular, in the present embodiment, whether the detection part 333 has detected a large movement in the bed-entering determination area C.

At this time, when the determination part 334 determines that the in-area presence condition is satisfied (C11), the state of the stationary device 1 is set to an alarm sound playback state (A12). In this case, the measured time has reached the time determined in accordance with the alarm time, and it is highly likely that the user is in the bed B. Thus, when the state of the stationary device 1 is in the alarm sound playback state, the sound control part 335 plays the alarm sound (first sound). Thus, the sound control part 335 plays the alarm sound when the measured time reaches the time determined in accordance with the alarm time. When the state of the stationary device 1 is in the alarm sound playback state, the light emission control part 337 blinks the light emitter 13. Furthermore, when the state of the stationary device 1 is in the alarm sound playback state, the image generation part 336 may generate an image for the alarm sound playback state. In this case, the image generated by the image generation part 336 is displayed on the display 11.

In the present embodiment, when the state of the stationary device 1 becomes the alarm sound playback state, playback of the alarm sound is started. Thus, in the present embodiment, when the measured time reaches the time determined in accordance with the alarm time, if the in-area presence condition is satisfied, the alarm sound is played. As a result, the user can be notified of the arrival of the alarm time. Thereafter, during playback of the alarm sound, when a large movement is continuously detected in the bed-entering determination area C by the detection part 333 for a predetermined movement detection time (for example, 3 seconds), the volume of the alarm sound is reduced (the playback of the alarm sound may be stopped). At this time, the type of the alarm sound may be changed from the first alarm sound to the second alarm sound. By reducing the volume of the alarm sound when a large movement of the user is continuously detected in this manner, the user can be encouraged to move more, whereby the user can be encouraged to wake up.

Thereafter, when the volume of the alarm sound is low, if the detection part 333 detects small movements but does not detect large movements for a predetermined non-movement waiting time (for example, 3 minutes), the volume of the alarm sound is increased again (if playback of the alarm sound has been stopped, it is resumed). At this time, the type of the alarm sound may be changed from the second alarm sound to the first alarm sound. In this manner, by increasing the volume of the alarm sound when large movements of the user are not continuously detected, the user can be encouraged to make large movements, whereby the user can be awakened.

Thus, in the present embodiment, when the state of stationary device 1 is in the alarm sound playback state, the volume or type of the alarm sound is repeatedly changed depending on whether a large movement is detected within the bed-entering determination area C. However, when the state of stationary device 1 is in the alarm sound playback state, the volume and type of the alarm sound may not be changed, or may be changed based on other requirements regardless of whether a large movement is detected.

In the present embodiment, the light emission control part 337 always blinks the light emitter 13 while the state of the stationary device 1 is in the alarm sound playback state. As a result, the user can be informed that the state of the stationary device 1 is in the alarm sound playback state by means of something other than sound. In particular, in the present embodiment, the light emission control part 337 may blink the light emitter 13 slowly when the state of the stationary device 1 is in the alarm sound playback state and the volume of the alarm sound is low, and may blink the light emitter 13 quickly when the state of the stationary device 1 is in the alarm sound playback state and the volume of the alarm sound is high. Note that when the state of the stationary device 1 is in the alarm sound playback state, the light emission control part 337 may maintain the light emitter 13 in an on or off state without blinking it. When the state of the stationary device 1 is in the alarm sound playback state, the light emission control part 337 may change the light-emitting color of the light emitter 13.

When the stationary device 1 is in the alarm sound playback state (A12), if the determination part 334 determines that the outside-area presence condition is satisfied (C12), and specifically, if the detection part 333 detects a large movement (position of the object) in the bed-exit determination area D, the stationary device 1 is put into a bed-exit sound playback state (A13). In this case, it is highly likely that the user has moved from inside the bed B to outside the bed B. When the stationary device 1 is in the bed-exit sound playback state, the sound control part 335 plays the bed-exit sound (second sound), which is different from the alarm sound. Furthermore, when the stationary device 1 is in the bed-exit sound playback state, the light emission control part 337 illuminates the light emitter 13 in a plurality of colors, such as rainbow colors. Furthermore, when the state of stationary device 1 is in the bed-exit sound playback state, the image generation part 336 may generate an image different from that generated when the state of stationary device 1 is in the alarm sound playback state, and thus, an image different from that displayed when the state of stationary device 1 is in the alarm sound playback state may be displayed on the display 11.

Thus, in the present embodiment, the sound control part 335 changes the sound playback manner when, after the determination part 334 determines that the in-area presence condition is satisfied, it determines that the in-area presence condition is no longer satisfied and the outside-area presence condition is satisfied. In other words, in the present embodiment, the sound control part 335 changes the sound playback manner when an in-area/outside-area movement condition (second condition) is satisfied, which includes the a large movement (object position) that was detected in bed-entering determination area C no longer being detected in bed-entering determination area C and a large movement (object position) being detected in the bed-exit determination area D. Specifically, in the present embodiment, when the in-area/outside-area movement condition is satisfied, the determination part 334 determines that the bed-exit condition (sound playback condition for playing the bed-exit sound) indicating that the user has left the bed B is satisfied, and when this determination is made, the sound control part 335 stops the playback of the alarm sound and plays the bed-exit sound. In this manner, when the user leaves the bed B, the playback of the alarm sound can be stopped, and the user can be encouraged to move and leave the bed B. Furthermore, continuation of the playback of the alarm sound when the user is not on the bed B is suppressed. Since the bed-exit sound is played when the user leaves the bed B, the user can be informed that the alarm sound has been stopped not due to a malfunction.

In particular, in the present embodiment, when the in-area/outside-area movement condition is satisfied, the sound control part 335 changes the sound playback manner without determining whether the presence presumption condition is satisfied by the determination part 334. As a result, unnecessary determination of whether the presence presumption condition is satisfied can be prevented. Furthermore, since there is no need to determine whether the presence presumption condition is satisfied, the sound playback manner can be quickly changed (alarm sound stopped) when the user leaves the bed B.

Note that the sound control part 335 may change the sound playback manner in any manner as long as the sound playback manner is changed when the determination part 334 determines that the in-area/outside-area movement condition is satisfied. Thus, when the determination part 334 determines that the in-area/outside-area movement condition is satisfied, the sound control part 335 may change the sound playback manner by stopping the playback of the alarm sound.

In the present embodiment, the light emission control part 337 changes the light emission manner of the light emitter 13 when, after the determination part 334 determines that the in-area presence condition is satisfied, it determines that the in-area presence condition is no longer satisfied and the outside-area presence condition is satisfied. In other words, in the present embodiment, the light emission control part 337 changes the light emission manner of the light emitter 13 when the in-area/outside-area movement condition (second condition) is satisfied. Specifically, the light emission control part 337 illuminates the light emitter 13, which was lit in a single color, in a plurality of colors. As a result, the user can be informed that the alarm sound has been stopped not due to a malfunction. Note that the light emission control part 337 may change the light emission manner of the light emitter 13 in any manner. Thus, the light emission control part 337 may change the light emission manner so that the light emitter 13 becomes, for example, brighter.

When the stationary device 1 is in the alarm sound playback state (A12), if the determination part 334 determines that the absence presumption condition is satisfied (C13), and specifically, if the detection part 333 does not detect even a small movement, the stationary device 1 is put into an alarm sound stopped/waiting state (A14). In this case, the user may not be in the bed B. Thus, when the stationary device 1 is in the alarm sound stopped/waiting state, the sound control part 335 does not play sound. Furthermore, when the stationary device 1 is in the alarm sound stopped/waiting state, the light emission control part 337 turns off the light emitter 13. When the stationary device 1 is in the alarm sound stopped/waiting state, the image generation part 336 may generate an image different from that when the stationary device 1 is in the alarm sound playback state or the bed-exit sound playback state.

Thus, in the present embodiment, the sound control part 335 stops playing the alarm sound when, after the determination part 334 determines that the in-area presence condition is satisfied, it determines that the in-area presence condition is no longer satisfied and the absence presumption condition is satisfied. In other words, in the present embodiment, the sound control part 335 changes the sound playback manner when the large movement (object position) that was detected in the bed-entering determination area C by the detection part 333 is no longer detected in the bed-entering determination area C, and an outside-area movement presumption condition (third condition) including the detection part 333 not detecting even a small movement is satisfied. From another perspective, the sound control part 335 stops the playback of the alarm sound when the state changes from one in which the presence condition is determined to be satisfied (the state in which one of the in-area presence condition and the presence presumption condition is determined to be satisfied by the determination part 334) to one in which the presence condition is determined not to be satisfied (the state in which neither the in-area presence condition nor the presence presumption condition is determined to be satisfied by the determination part 334), during playback of the alarm sound. As a result, the alarm sound can be prevented from being played unnecessarily when there is a possibility that the user is not in bed.

The case in which the user moved from inside the bed B to outside the bed within the detection area of the object sensor 21, i.e., the user moved in the direction indicated by the white arrow in FIG. 4, will be considered. In such a case, the large movement (object position) that was detected in the bed-entering determination area C is now detected in the bed-exit determination area D. Thus, in such a case, the in-area/outside-area movement condition is satisfied, and it can be determined whether the user has moved from inside the bed B to outside the bed B.

Conversely, the case in which the user moved from inside the bed B to outside the bed B after moving from inside the detection area of the object sensor 21 to outside the detection area, and specifically, the case in which the user moved in the direction indicated by the hatched arrow in FIG. 4, will be considered. In such a case, the large movement (object position) detected in bed-entering determination area C is no longer detected, but is not subsequently detected in bed-exit determination area D. However, if the user remains in the bed B after moving from inside the detection area of the object sensor 21 to outside the detection area, vibration due to breathing of the user is transmitted on the bed B, and small movements occur in the detection area of the object sensor 21. In the present embodiment, the large movement (object position) detected in the bed-entering determination area C is no longer detected, and based on detection results (i.e., detection results related to the presence or absence of small movements) different from the large movement (object position) using the output of the object sensor 21, it is determined whether the condition (first condition) that is satisfied when the user remains in the bed B is satisfied. Thus, in the present embodiment, even if the user moves in the direction indicated by the hatched arrow in FIG. 4, it can be determined whether the user has moved from inside the bed B to outside the bed B. Specifically, even if the user is detected in a predetermined area and then is no longer detected, it is possible to determine that the user has left the predetermined area. In particular, in the present embodiment, by determining based on whether a small movement is detected by the detection part 333, it is possible to prevent the user (object) from being determined as not being present on the bed B when the user remains on the bed B.

In the present embodiment, the condition that a small movement is detected by the detection part 333 is used as the condition that is satisfied when the user stays in the bed B. However, another condition based on the output of the object sensor 21 may be used as the condition that is satisfied when the user stays in the bed B.

In the present embodiment, the light emission control part 337 changes the light emission manner of the light emitter 13 when, after the determination part 334 determines that the in-area presence condition is satisfied, it determines that the in-area presence condition is no longer satisfied and the absence presumption condition is satisfied. In other words, in the present embodiment, the light emission control part 337 changes the light emission manner of the light emitter 13 when the outside-area movement presumption condition (third condition) is satisfied. Specifically, the light emission control part 337 turns off the blinking light emitter 13. As a result, the user can be informed that the alarm sound has been stopped not due to a malfunction. Note that the light emission control part 337 may change the light emission manner of the light emitter 13 in any manner. Thus, the light emission control part 337 may change the light emission manner such that, for example, the illuminance of the light emitter 13 is reduced.

In the present embodiment, the light emission control part 337 changes the light emission manner in different manners when the in-area/outside-area movement condition is satisfied and when the outside-area movement presumption condition is satisfied. The alarm sound is stopped when either condition is satisfied, and by changing the light emission manner in different manners in accordance with the condition in this manner, it is possible to inform the user of which condition was satisfied that caused the alarm sound to stop. However, the light emission control part 337 may change the light emission manner in the same manner when the in-area/outside-area movement condition is satisfied and when an outside-area movement presumption condition is satisfied. In this case, for example, the light emission control part 337 may illuminate the light emitter 13 in the same color in either case.

From the foregoing, in the present embodiment, when the state of the stationary device 1 is in the alarm sound playback state (A12), the sound control part 335 changes the sound playback manner when the in-area/outside-area movement condition or the outside-area movement presumption condition becomes satisfied. In particular, in the present embodiment, the sound control part 335 stops the playback of the alarm sound at such a time. Note that the sound control part 335 may stop the playback of the alarm sound only when either the in-area/outside-area movement condition or the outside-area movement presumption condition becomes satisfied.

Furthermore, even if the outside-area movement presumption condition is satisfied, if the outside-area movement presumption condition is satisfied after a reference time (for example, 1 second, the first period of time) has elapsed since a large movement (object position) was last detected in the bed-entering determination area C, the sound control part 335 need not stop the alarm sound, and thus, need not change the sound playback manner. When the object position is no longer detected without a large movement being detected immediately before by the detection part 333, it is not considered that the user has moved out of the bed B, and in such a case, stoppage of the alarm is prevented.

Note that the sound control part 335 may change the sound playback manner in any manner as long as the sound playback manner changes when the outside-area movement presumption condition is satisfied. Thus, when the outside-area movement presumption condition is satisfied, the sound control part 335 may change the sound playback manner by stopping the playback of the alarm sound and playing a sound different from the alarm sound.

When the stationary device 1 is in the alarm sound stopped/waiting state (A14), if the absence presumption condition continues to be satisfied for a predetermined waiting time (for example, 20 seconds; second period of time), or if the presence condition is not satisfied for the predetermined waiting time (C14), the stationary device 1 is put into the bed-exit sound playback state (A13). In this case, it is highly likely that the user is not in the bed B. Thus, in this case, the stationary device 1 is put into the bed-exit sound playback state (A13), the sound control part 335 plays the bed-exit sound (second sound), and the light emission control part 337 illuminates the light emitter 13 in a plurality of colors.

Thus, in the present embodiment, the sound control part 335 plays the bed-exit sound when the waiting time has elapsed in a state in which, after the determination part 334 determines that the in-area presence condition is satisfied, it determines that the in-area presence condition is no longer satisfied and the absence presumption condition is satisfied. In other words, in the present embodiment, when neither a large movement nor a small movement is detected by the detection part 333 from the time the outside-area movement presumption condition is satisfied until the waiting time has elapsed, the determination part 334 determines that the bed-exit condition (sound playback condition for playing the bed-exit sound) indicating that the user has left the bed B is satisfied, and when it is determined in this manner, the sound control part 335 plays the bed-exit sound. As a result, playback of the alarm sound can be stopped when there is a high possibility that the user has left the bed B, and the continuation of the playback of the alarm sound when the user is not on the bed B is prevented. Furthermore, when the user leaves the bed B, the bed-exit sound is played, and therefore the user is informed that the alarm sound has been stopped not due to a malfunction.

When the state of the stationary device 1 is in the alarm sound stopped/waiting state (A14), if the outside-area presence condition is satisfied within the waiting time (C15), and specifically, if a large movement (position of the object) is detected within the bed-exit determination area D, the state of the stationary device 1 is changed to the bed-exit sound playback state (A13) without waiting for the lapse of the predetermined waiting time. In this case, it is highly likely that the user has moved from inside the bed B to outside the bed B. Thus, the sound control part 335 plays the bed-exit sound (second sound), and the light emission control part 337 illuminates the light emitter 13 in a plurality of colors.

Thus, in the present embodiment, when the detection part 333 detects a large movement (position of the object) in the bed-exit determination area D until the waiting time has elapsed after the determination part 334 determines that, after it determines the in-area presence condition is satisfied, the in-area presence condition is no longer satisfied and the absence presumption condition is satisfied, the sound control part 335 plays the bed-exit sound without resuming the playback of the alarm sound. In other words, in the present embodiment, the determination part 334 determines that the bed-exit condition (sound playback condition for playing the bed-exit sound) is satisfied when the detection part 333 detects a large movement in the bed-exit determination area D until the waiting time has elapsed after the outside-area movement presumption condition is satisfied, and the sound control part 335 plays the bed-exit sound when it is determined in this manner. In such a case, by playing the bed-exit sound without resuming the playback of the alarm sound, playback of the alarm sound is suppressed when it is clear that the user is not in the bed B.

In the present embodiment, when the stationary device 1 is in the alarm sound playback state (A12) or the alarm sound stopped/waiting state (A14) and the outside-area presence condition is satisfied (C12, C15), and when the stationary device 1 is in the alarm sound stopped/waiting state (A14) and the absence presumption condition is satisfied over the waiting time (C14), the stationary device 1 enters the bed-exit sound playback state and the bed-exit sound is played. This allows the bed-exit sound to be played when it is assumed that the user has left the bed B, and the user can be encouraged to leave the bed B. However, in some of these cases, the bed-exit sound may not be played.

In the present embodiment, the bed-exit sound played in these cases is the same sound in either case. However, the bed-exit sound played may be different depending on the case. For example, the sound control part 335 may play a first bed-exit sound (second sound) when the outside-area presence condition is satisfied, and may play a second bed-exit sound (third sound) when the absence presumption condition is satisfied over the waiting time. For example, the first bed-exit sound is fanfare, and the second bed-exit sound is fanfare different from the first bed-exit sound. As a result, the user can understand what condition was satisfied to determine that the bed-exit condition was satisfied.

Furthermore, when the state of the stationary device 1 is in the alarm sound stopped/waiting state (A14), if the presence condition is satisfied within the waiting time (C16), and specifically, if a large movement or a small movement is detected in the bed-entering determination area C, the state of the stationary device 1 is returned to the alarm sound playback state ( A12). In this case, it is highly likely that the user is on the bed B. Thus, the sound control part 335 plays the alarm sound in accordance with the situation, and the light emission control part 337 blinks the light emitter 13. Thus, the sound control part 335 controls the playback of the alarm sound based on whether the presence condition is satisfied. In such a case, since it is considered that the user is on the bed B, by playing the alarm sound, the user is encouraged to wake up.

Thus, in the present embodiment, the sound control part 335 resumes the playback of the alarm sound when the detection part 333 detects a large movement (position of the object) or a small movement in the bed-entering determination area C before the waiting time has elapsed since the determination part 334 determines that the in-area presence condition is satisfied and then determines that the in-area presence condition is no longer satisfied and the absence presumption condition is satisfied without the outside-area presence condition being satisfied. Specifically, when the playback of the alarm sound is stopped because the outside-area movement presumption condition is satisfied, the sound control part 335 resumes the playback of the alarm sound when a large movement or a small movement is detected in the bed-entering determination area C before the waiting time has elapsed since the playback of the alarm sound was stopped. As a result, the user can be encouraged to get out of the bed B when there is a high possibility that the user has returned again to the bed B. When the playback of the alarm sound is stopped because the in-area/outside-area movement presumption condition is satisfied (when the state of the stationary device 1 is switched from alarm sound playback state A12 to bed-exit sound playback state A13), the sound control part 335 does not resume playback of the alarm sound even if a small movement is detected between the time when the playback of the alarm sound was stopped and the time when the waiting time described above has elapsed. In this case, since it is highly likely that the user has left the bed B, unnecessary resumption of playback of the alarm sound is suppressed.

When the stationary device 1 is in the bed-exit sound playback state (A13), if the playback of the bed-exit sound ends (C17), the stationary device 1 is put into a stopped state (A15). When the stationary device 1 is in the stopped state, since it is basically considered that the user has left the bed B, the sound control part 335 stops the playback of sound. Furthermore, when the stationary device 1 is in the stopped state, the light emission control part 337 turns off the light emitter 13. Furthermore, when the stationary device 1 is in the stopped state, the image generation part 336 may generate an image different from that when the stationary device 1 is in the alarm sound playback state, the bed-exit sound playback state, or the alarm sound stopped/waiting state.

When the measured time reaches the time determined in accordance with the alarm time, if the determination part 334 determines that the in-area presence condition is not satisfied (C18), the state of the stationary device 1 is changed to the stopped state (A15). This is because it is considered that the user has left the bed B when the measured time reaches the time determined in accordance with the alarm time.

When the stationary device 1 is in the stopped state (A15), if the determination part 334 determines that the in-area presence condition is satisfied (C19), and specifically, if the detection part 333 detects a large movement (position of the object) in the bed-entering determination area C, the stationary device 1 is switched to a standby state (A16). Thus, when it is considered that the user has returned to the bed B, the stationary device 1 is switched from the stopped state to the standby state. Even when the stationary device 1 is in the standby state, the sound control part 335 stops the sound playback, and the light emission control part 337 turns off the light emitter 13, in the same manner as the stopped state (A15). At this time, the image generation part 336 may generate an image different from that when the stationary device 1 is in the stopped state, or may generate the same image.

When the stationary device 1 is in the standby state (A16), if the determination part 334 determines that the outside-area presence condition is satisfied (C20), and specifically, if the detection part 333 detects a large movement (object position) in the bed-exit determination area D, the stationary device 1 is returned to the stopped state (A15). When the stationary device 1 is in the standby state (A16), if the determination part 334 determines that the absence presumption condition is satisfied (C21), and specifically, if the detection part 333 detects neither a large movement (object position) nor a small movement, the stationary device 1 is returned to the stopped state (A15). Thus, when it is considered that the user has left the bed B, the stationary device 1 is switched from the standby state to the stopped state.

Conversely, when the state of the stationary device 1 is in the standby state (A16), if the determination part 334 determines that the presence presumption condition is satisfied throughout the bed-entering determination time (for example, 10 seconds; fourth period of time) (C22), and specifically, if the detection part 333 detects a small movement without detecting a large movement (position of the object) throughout the bed-entering determination time (without the in-area/outside-area movement condition and outside-area movement presumption condition being satisfied), the state of the stationary device 1 is returned to the alarm sound playback state (A12).

Thus, in the present embodiment, the sound control part 335 resumes the playback of the alarm sound when the detection part 333 detects a large movement in the bed-entering determination area C after the bed-exit condition is satisfied and the detection part 333 then detects a small movement without detecting a large movement (position of the object) over the bed-entering determination time. As a result, playback of the alarm sound can be resumed when the user returns to the bed B and goes to bed again, encouraging the user to leave the bed B. After the user leaves the bed B, it is considered that the user has come to gather things around the bed B or arrange the bed B. In this case, since the user does not sleep in the bed B, it is not necessary to resume the playback of the alarm sound. In the present embodiment, after a large movement is detected, when a large movement is not detected for a certain period of time and a small movement is detected, playback of the alarm sound is resumed. Thus, resumption of the alarm sound when the user comes to gather things around the bed B or arrange the bed B can be prevented.

Furthermore, if the detection part 333 detects a large movement within the bed-entering determination area C after the bed-exit condition is satisfied, the sound control part 335 may resume playing the alarm sound regardless of whether the detection part 333 detects a small movement during the bed-entering determination time.

In the present embodiment, the reached timing processing shown in FIG. 5 is ended when a predetermined processing duration (for example, 30 minutes or 30 seconds; third period of time) has elapsed since the measured time has reached the time determined in accordance with the alarm time. When the reached timing processing is ended, the sound control part 335 stops the sound playback, and the light emission control part 337 turns off the light emitter 13. Note that the reached timing processing may be ended when a predetermined end determination time (for example, 30 seconds) has elapsed while the stationary device 1 is in the stopped state (A15).

Thus, the state of the stationary device 1 is returned from the standby state (A16) to the alarm sound playback state (A12) during the period from when the measured time reaches the time determined in accordance with the alarm time until the processing duration described above has elapsed. Thus, after the bed-exit condition is satisfied, if the detection part 333 detects a large movement in the bed-entering determination area C before the processing duration has elapsed since the time determined in accordance with the alarm time, and thereafter, if the detection part 333 does not detect a large movement (object position) over the bed-entering determination time but detects a small movement, the sound control part 335 resumes playback of the alarm sound.

The reached timing processing may be ended when a predetermined processing duration (for example, 30 minutes; third period of time) has elapsed since the determination part 334 determined that the bed-exit condition was satisfied. In this case, if the detection part 333 detects a large movement in the bed-entering determination area C between the satisfaction of the bed-exit condition and the elapse of the processing duration, and if the detection part 333 subsequently detects no large movements (object position) but detects a small movement over the bed-entering determination time, the sound control part 335 resumes playing the alarm sound.

### <<Modification Example>>

Next, a modification example of the reached timing processing shown in FIG. 5 will be described.

In a modification example, if the bed-exit condition is not determined to be satisfied even after a predetermined grace period (fifth period of time, for example, 20 minutes) has elapsed since the measured time reaches the time determined in accordance with the alarm time, the sound control part 335 may execute an urging mode. The urging mode is a mode which more strongly encourages the user to wake up and get out of bed as compared to the normal mode until the grace period has elapsed. The grace period is shorter than the processing duration described above.

In the present modification example, in the urging mode, the reached timing processing shown in FIG. 5 is performed in the same manner as in the normal mode. However, in the urging mode, the non-movement waiting time when the stationary device 1 is in the alarm sound playback state is made shorter than in the normal mode. For example, the non-movement waiting time in the urging mode is set to one minute, whereas the non-movement waiting time in the normal mode is set to three minutes.

The alarm sound played in the urging mode may be different from the alarm sound played in the normal mode. For example, the alarm sound in the urging mode may be a faster and more urgent sound than in the normal mode. The volume of the alarm sound in the urging mode may be louder than in the normal mode.

Furthermore, the bed-exit sound played in the urging mode may be different from the bed-exit sound played in the normal mode. Thus, the sound control part 335 may play the first bed-exit sound (fourth sound) when the exit condition is met in the normal mode, and play a third bed-exit sound (fifth sound) different from the first bed-exit sound when the bed-exit condition is met in the urging mode. In this case, the playback time of the first bed-exit sound in the normal mode may be, for example, longer than the playback time of the third bed-exit sound in the urging mode.

Since the bed-exit sound is different between the urging mode and the normal mode in this manner, the user can understand how long it took to get out of bed. In particular, in the present modification example, since the first bed-exit sound in the normal mode has a longer playback time, users who want to hear the first bed-exit sound, which has a longer playback time, can be encouraged to get out of bed. A user who has not gotten out of bed until the urging mode is reached may not have time to listen to the long bed-exit sound slowly, but according to the present modification example, since the bed-exit sound is short in the urging mode, a user who is in a hurry is prevented from spending time listening to the bed-exit sound.

In the reached timing processing shown in FIG. 5, the sound played by the sound control part 335, the light emission manner of the light emitter 13 set by the light emission control part 337, and the image generated by the image generation part 336 are different for each of the states A12 to A16. However, only some of the sound played by the sound control part 335, the light emission manner of the light emitter 13 set by the light emission control part 337, and the image generated by the image generation part 336 may be different for each of the states A12 to A16. Thus, for example, the image generation part 336 may generate a similar image regardless of the states A12 to A16 of the stationary device 1.

### <<Example of Reached Timing Processing >>

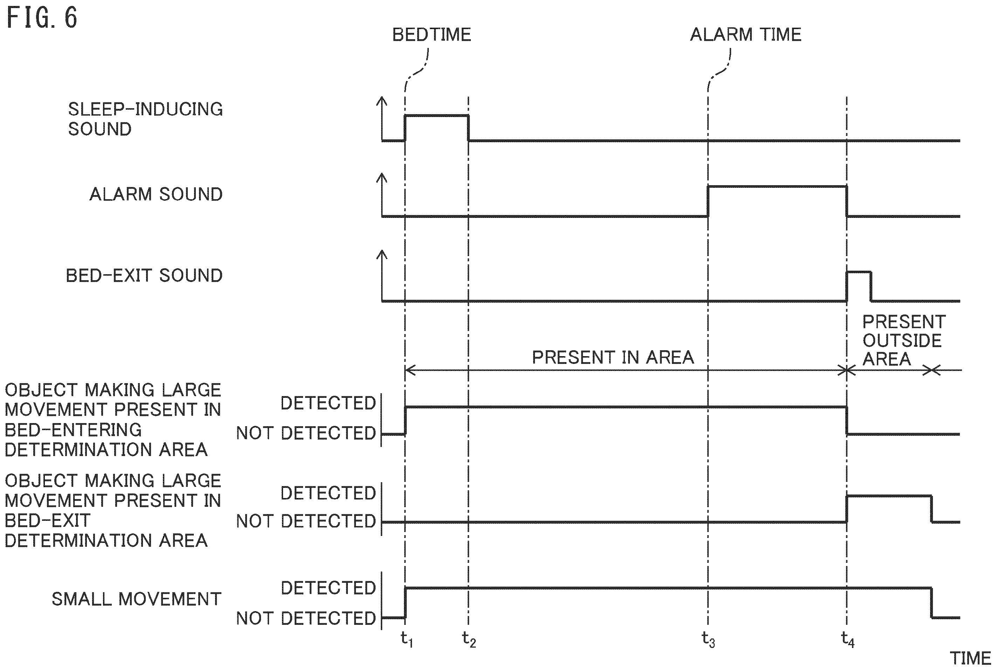

Next, a specific example of control of sound playback by the sound control part 335 when the reached timing processing is executed will be described with reference to FIGS. 6 to 8. FIGS. 6 to 8 are time charts of movements detected by the detection part 333 and the sound played by the sound control part 335.

FIG. 6 shows the case in which the user moves from inside the bed B to outside the bed B within the detection area of the object sensor 21 after the alarm sound has been played. In the example shown in FIG. 6, the sleep-inducing sound is played at time t₁ determined in accordance with the scheduled bedtime set by the setting part 332. In the present embodiment, the sleep-inducing sound is played for a predetermined playback duration (for example, 10 minutes) from time t₁, and is stopped at time t₂ when the playback duration has elapsed.

In the example shown in FIG. 6, since the user has been asleep on the bed B since time t₂, the detection part 333 continues to detect the object in the position where the user made a large movement such as getting into bed or turning over in bed in the bed-entering determination area C. Thus, the determination part 334 determines that the in-area presence condition is satisfied.

Thereafter, since the user is still on the bed B at time t₃ determined in accordance with the alarm time set by the setting part 332, the detection part 333 detects the object at a position where a large movement occurred in the bed-entering determination area C. Thus, at time t₃, the determination part 334 determines that the in-area presence condition is satisfied. As a result, the state of the stationary device 1 is set to the alarm sound playback state, and playback of the alarm sound is started.

Thereafter, when the user moves from inside the bed B to outside the bed B at time t₄, the detection part 333 no longer detects an object in the bed-entering determination area C after time t₄, and detects an object in the bed-exit determination area D at a position where a large movement occurred. Thus, the determination part 334 determines that the outside-area presence condition is satisfied. As a result, the state of the stationary device 1 is set to the bed-exit sound playback state, and playback of the bed-exit sound is started. Furthermore, the in-area presence condition may be determined to be satisfied based on a large movement such as the user turning over being periodically detected.

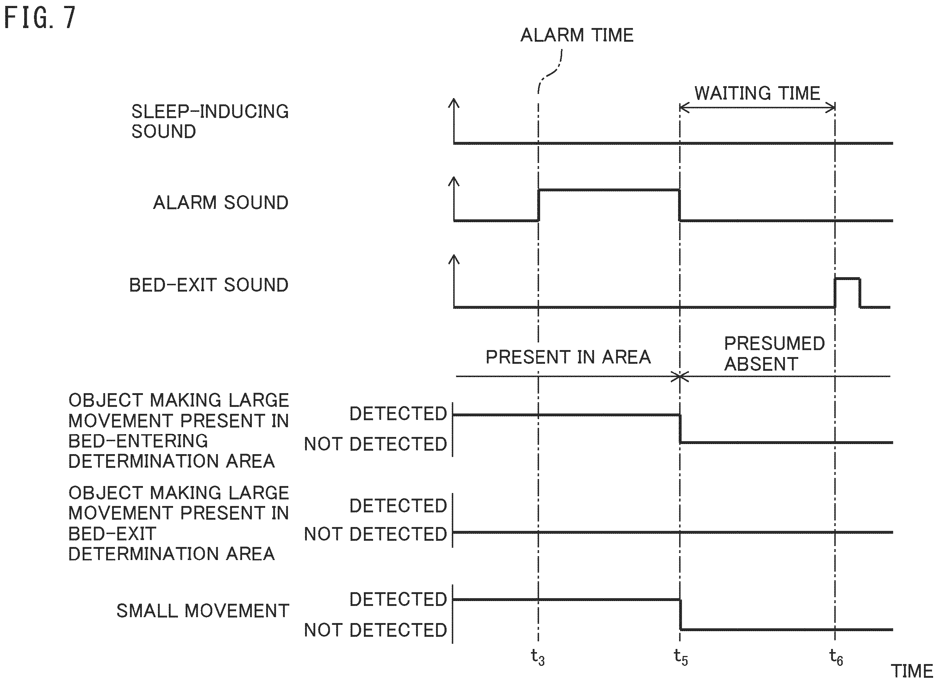

FIG. 7 shows the case in which, after the alarm sound has been played, outside the detection area of the sensor 21, the user moves from inside the bed B to outside the bed B. In the example shown in FIG. 7, the playback of the alarm sound starts at time t₃, which is the alarm time.

When the user moves from inside the bed B to outside the bed B outside the detection area of the sensor 21 at time t₅, the detection part 333 no longer detects the object at the position where the large movement occurred within the detection area (bed-entering determination area C and bed-exit determination area D), and no longer detects the small movement. Thus, the determination part 334 determines that the absence presumption condition is satisfied. As a result, the state of stationary device 1 is changed to the alarm sound stopped/waiting state, and the playback of the alarm sound is stopped.

In the example shown in FIG. 7, from time t₅ to time t₆ when a predetermined waiting time has elapsed, neither the object at the position where the large movement occurred nor a small movement is detected by the detection part 333. As a result, at time t₆, the state of the stationary device 1 is set to the bed-exit sound playback state, and playback of the bed-exit sound is started.

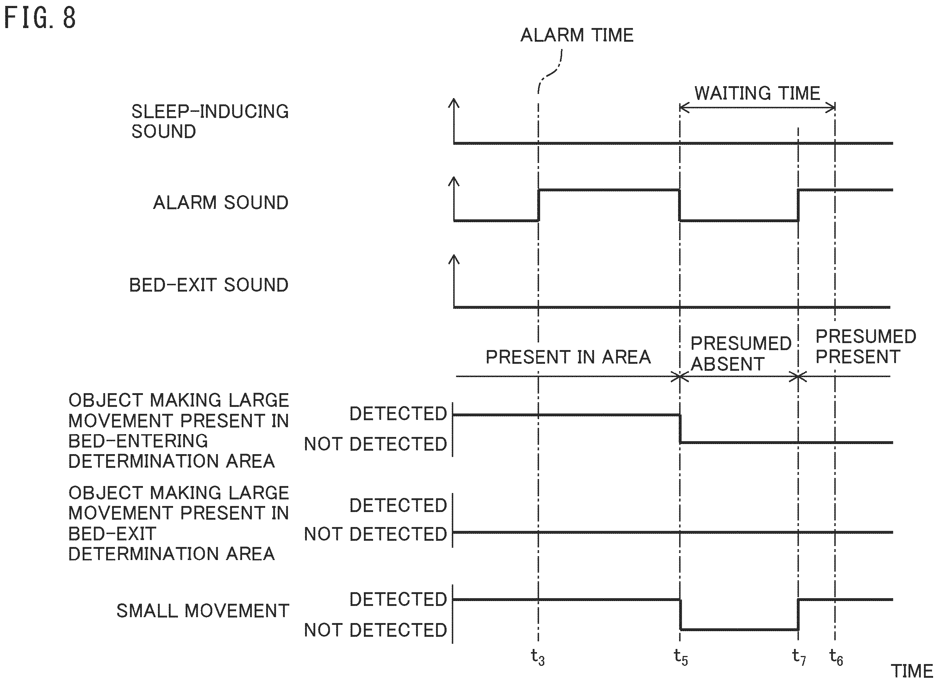

FIG. 8 shows the case in which the user moves from within the bed B to outside the detection area of the sensor 21 but remains within the bed B. In the example shown in FIG. 8, the playback of the alarm sound is stopped at time t₅, in the same manner as the example shown in FIG. 7.

In the example shown in FIG. 8, though the user remains in the bed B, the detection part 333 has not detected an object at the position where the large movement occurred or a small movement after time t₅. However, since the user remains in the bed B, the detection part 333 detects a small movement at time t₇ before a predetermined waiting time has elapsed from time t₅. Thus, the determination part 334 determines that the presence presumption condition is satisfied after time t₇. As a result, after time t₇, the state of the stationary device 1 is again set to the alarm sound playback state, and playback of the alarm sound is resumed.

### <<Processing Flow>>

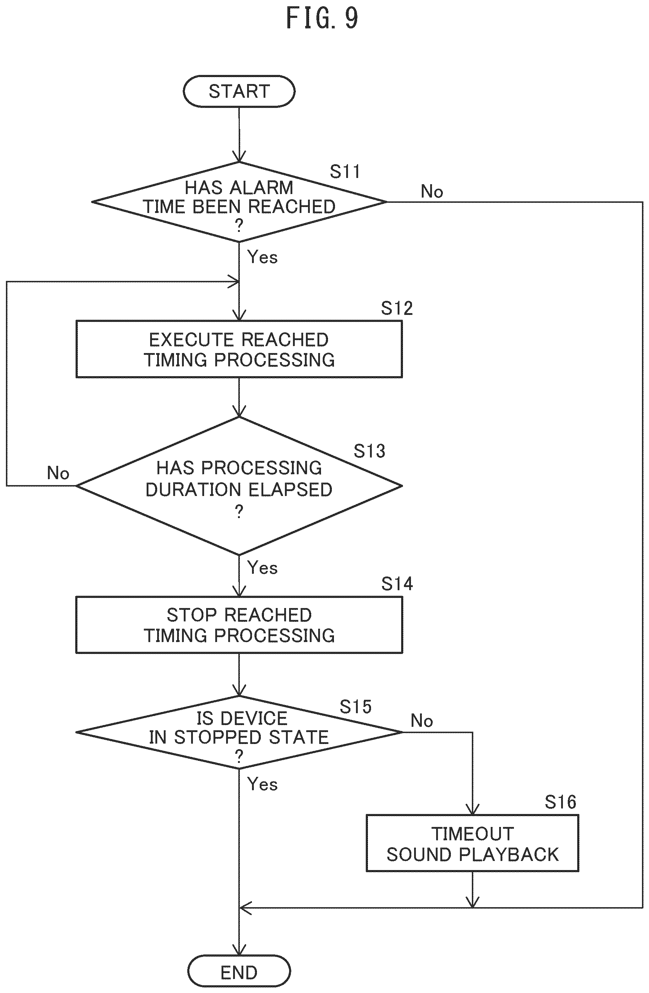

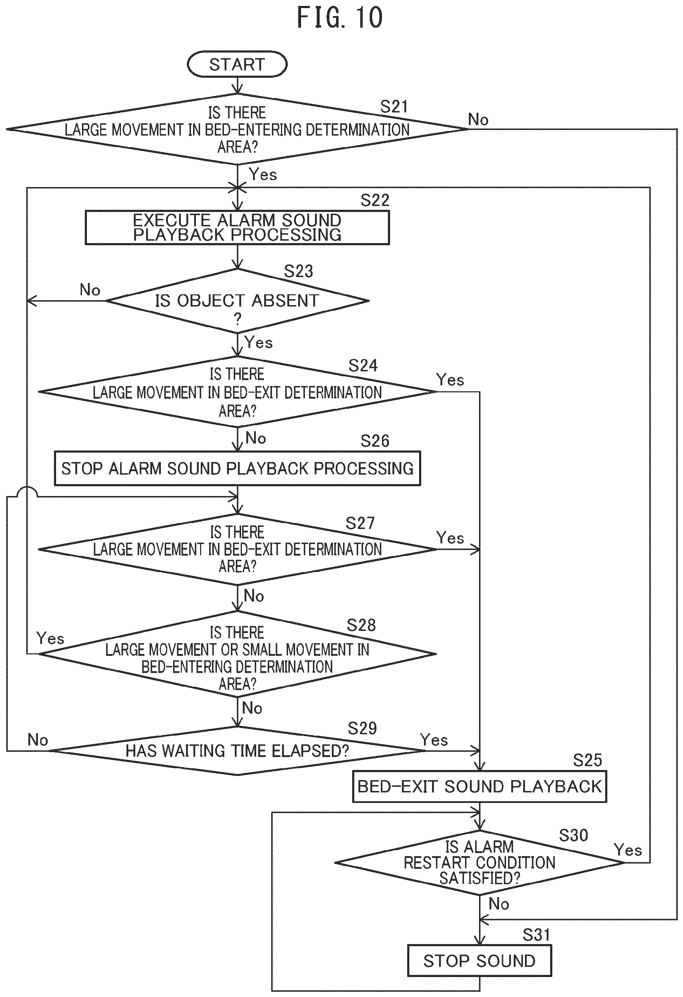

Next, the flow of sound playback processing for controlling sound playback will be described with reference to FIGS. 9 and 10. FIG. 9 is a flow chart schematically showing the flow of the sound playback processing. The sound playback processing shown in FIG. 9 is executed by the processor 33.

When sound playback processing is started, first, the sound control part 335 determines whether the measured time has reached the time determined in accordance with the alarm time (step S11). When it is determined in step S11 that the measured time has not reached the time determined in accordance with the alarm time, the sound playback processing is ended.

Conversely, when it is determined in step S11 that the measured time has reached the time determined in accordance with the alarm time, the sound control part 335 executes the reached timing processing shown in FIG. 10 (step S12). Next, the sound control part 335 determines whether a predetermined processing duration has elapsed from the time determined in accordance with the alarm time (step S13). When it is determined in step S13 that the processing duration has not elapsed, the reached timing processing continues.

Conversely, when it is determined in step S13 that the processing duration has elapsed, the sound control part 335 stops the reached timing processing (step S14). Next, the sound control part 335 determines whether the state of the stationary device 1 when the reached timing processing is stopped is the stopped state (A15), and specifically, whether step S30 of FIG. 10, which will be described later, is being repeatedly executed (step S15). When it is determined in step S15 that the state of the stationary device 1 is the stopped state, the sound playback processing is ended. Conversely, when it is determined in step S15 that the state of the stationary device 1 is not the stopped state (for example, if the alarm sound is being played), the sound control part 335 plays a timeout sound indicating that the processing duration has elapsed and a timeout has occurred (step S16), and the sound playback processing is then ended.

Next, the flow of the reached timing processing will be described with reference to FIG. 10. FIG. 10 is a flow chart schematically showing the flow of the reached timing processing. The reached timing processing shown in FIG. 10 is executed by the processor 33 when an instruction to execute the process is issued in step S12 of FIG. 9. The reached timing processing shown in FIG. 10 is stopped when an instruction to stop the process is issued in step S14 of FIG. 9.

When the reached timing processing is started, first, the determination part 334 determines whether a large movement is detected in the bed-entering determination area C (step S21). When it is determined in step S21 that a large movement is detected in the bed-entering determination area C, the sound control part 335 executes an alarm sound playback processing (step S22). In the alarm sound playback processing, the sound control part 335 first starts playing the alarm sound at a high volume. Then, in the alarm sound playback processing, if the determination part 334 determines that a large movement has been continuously detected in the bed-entering determination area C for a predetermined movement detection time, the volume of the alarm sound is reduced. Thereafter, in the alarm sound playback processing, if a large movement is not detected in the bed-entering determination area C for a predetermined non-movement waiting time, the volume of the alarm sound is increased again.

When the alarm sound playback processing is started in step S22, the determination part 334 determines whether neither a large movement nor a small movement has been detected in the bed-entering determination area C by the detection part 333 (step S23). When it is determined in step S23 that either a large movement or a small movement has been detected in the bed-entering determination area C, step S22 is repeated again. Conversely, when it is determined in step S23 that neither a large movement nor a small movement has been detected, the determination part 334 determines whether a large movement has been detected in the bed-exit determination area D (step S24). When it is determined in step S24 that a large movement has been detected, the sound control part 335 plays the bed-exit sound (step S25).

Conversely, when it is determined in step S24 that a large movement has not been detected, the sound control part 335 stops the alarm sound playback processing (step S26). Next, the determination part 334 determines whether a large movement has been detected in the bed-exit determination area D (step S27). When it is determined in step S27 that a large movement has been detected, the sound control part 335 plays the bed-exit sound (step S25). Conversely, when it is determined in step S27 that a large movement has not been detected, the determination part 334 determines whether a large movement or a small movement has been detected in the bed-entering determination area C by the detection part 333 (step S28). When it is determined in step S28 that either a large movement or a small movement has been detected in the bed-entering determination area C, the sound control part 335 starts the alarm sound playback processing again (step S22). Conversely, when it is determined in step S28 that neither a large movement nor a small movement has been detected in the bed-entering determination area C, the determination part 334 determines whether a predetermined waiting time has elapsed since the alarm sound playback processing was stopped (step S29). When it is determined in step S29 that the predetermined waiting time has not elapsed, steps S27 and S28 are repeated. Conversely, when it is determined in step S29 that the predetermined waiting time has elapsed, the sound control part 335 plays the bed-exit sound (step S25).

When the playback of the bed-exit sound in step S25 ends, the determination part 334 determines whether a restart condition for restarting the playback of the alarm sound is satisfied (step S30). When it is determined in step S30 that the restart condition is not satisfied, the sound control part 335 stops the playback of the sound (step S31), and steps S30 and S31 are then repeated. Conversely, when it is determined in step S30 that the restart condition is satisfied, the sound control part 335 starts the alarm sound playback processing (step S22).

### Image Generation Processing, Time Signal Playback Processing and Light Emission Processing

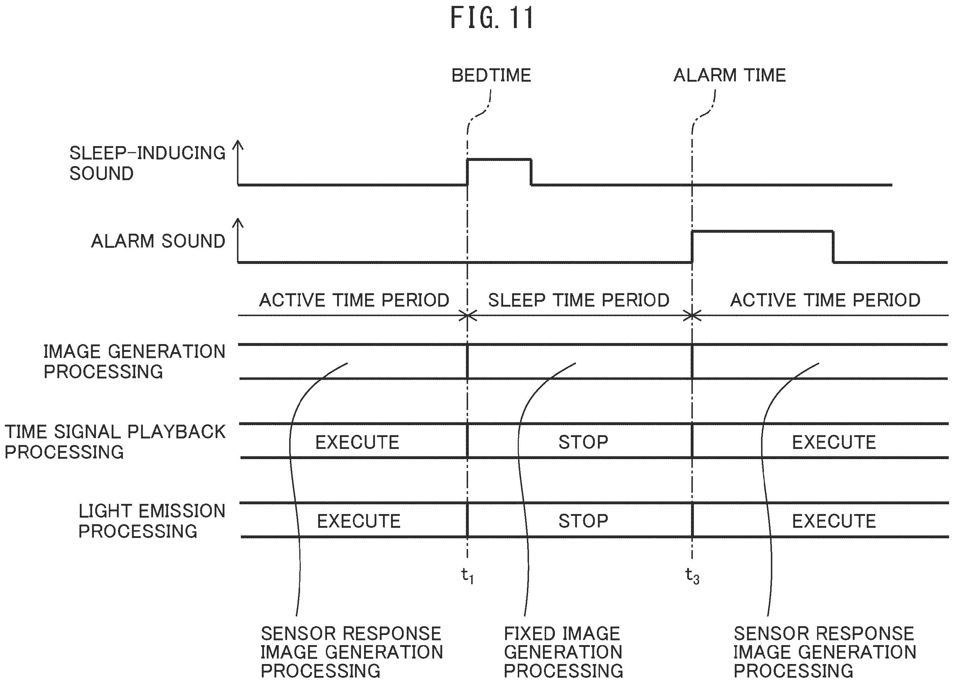

Next, image generation processing, time signal playback processing, and light emission processing will be described with reference to FIGS. 11 to 14.

The image generation processing is processing executed mainly by the image generation part 336, and is processing for generating an image to be displayed on the display 11. In the present embodiment, in the image generation processing, the image generation part 336 generates an image including an image (time, date and time, day of the week, etc.) related to the time measured by the clock part 331. Furthermore, in the image generation processing, the image generation part 336 generates an image in accordance with the situation including a set related to the time performed by the setting part 332, the time measured by the clock part 331, detection results by the detection part 333, etc.

In the present embodiment, the image generation processing includes fixed image generation processing for generating an image regardless of the output of the object sensor 21, and sensor response image generation processing for generating an image in accordance with the output of the object sensor 21. Details of the image generation processing will be described later.

The time signal playback processing is processing executed mainly by the sound control part 335, and is processing for playing a time signal sound when the measured time reaches a preset time. In the present embodiment, in the time signal playback processing, the sound control part 335 plays a time signal sound for notifying the time on the hour every hour. However, in the time signal playback processing, the sound control part 335 may play the time signal sound only on a specific hour (for example, 12:00 a.m., 12:00 p.m.), or may play the time signal sound at times other than the hour.

When the measured time reaches a preset time, not only may the sound control part 335 play a time signal sound, but also the image generation part 336 may generate a time signal image notifying the time, and the time signal image may be displayed on the display 11. The time signal image may be, for example, a video indicating that the preset time has been reached.

The light emission processing is processing that is mainly executed by the light emission control part 337, and is processing for controlling the light emission from the light emitter 13. In the light emission processing, the light emission control part 337 causes the light emitter 13 to emit light when any light-emitting condition related to the light emission of the light emitter 13 is satisfied. In the light emission processing, the light emission control part 337 causes the light emitter 13 to illuminate or blink when any light-emitting condition is satisfied. Furthermore, in the light emission processing, the light emission control part 337 may change the light emission color of the light emitter 13 when a light-emitting condition is satisfied. Furthermore, in the light emission processing, the light emission control part 337 may cause the light emitter 13 to emit light in a plurality of colors simultaneously when a light-emitting condition is satisfied.

The light-emitting condition for light emission may include, for example, a condition which is satisfied when the time reaches the preset time. In this case, when the measured time reaches the preset time, the light emitter 13 emits light while playing a time signal sound. Furthermore, if the stationary device 1 includes a communication module and receives information via this communication module, the condition for light emission described above may include a condition which is satisfied when such information is received.

Though the light emission control part 337 controls the light emission from the light emitter 13 in the reached timing processing, the control of light emission in this reached timing processing is also an example of emission processing. Thus, for example, when a light emission condition in which the measured time reaches a time determined in accordance with the alarm time while the light emission processing is being executed is satisfied, the light emission control part 337 causes the light emitter 13 to blink, as described above.

FIG. 11 is a time chart showing the execution status of image generation processing, time signal playback processing, and light emission processing. In the example shown in FIG. 11, in the same manner as the example shown in FIG. 6, the sleep-inducing sound is played at time t₁ (the same as the scheduled bedtime of FIG. 11) determined in accordance with the scheduled bedtime set by the setting part 332. At time t₃ (the same as the alarm time of FIG. 11) determined in accordance with the alarm time set by the setting part 332, an alarm sound is played in accordance with the situation.

As shown in FIG. 11, in the present embodiment, during a sleep time period from time t₁ determined in accordance with the scheduled bedtime to time t₃ determined in accordance with the alarm time, the fixed image generation processing is executed as the image generation processing. Thus, during the sleep time period, the image generation part 336 generates an image regardless of the output of the object sensor 21, and thus, an image independent of the output of the object sensor 21 is displayed on the display 11. Note that since the output of the object sensor 21 is not required during the sleep time period, the supply of power to the object sensor 21 may be stopped. In this case, no signals are output from the object sensor 21, and the image generation part 336 may output a fixed image that does not change based on the absence of a signal input from the object sensor 21.

Conversely, as shown in FIG. 11, in the present embodiment, in an active time period (time period which does not include the sleep time period), which is a time period different from the sleep time period, sensor response image generation processing is executed as the image generation processing. Thus, in the active time period, the image generation part 336 generates an image in accordance with the output of the object sensor 21, and thus, the image in accordance with the output of the object sensor 21 is displayed on the display 11.

As shown in FIG. 11, in the present embodiment, in the sleep time period, the time signal playback processing is stopped. Thus, in the sleep time period, the sound control part 335 does not play the time signal sound even if the measured time reaches a preset time (for example, each hour). Furthermore, in the present embodiment, the light emission processing is stopped in the sleep time period. Thus, in the sleep time period, the light emission control part 337 keeps the light emitter 13 turned off without emitting light, even if the light emission condition described above is satisfied.

Conversely, as shown in FIG. 11, in the present embodiment, during the active time period, the time signal playback processing is executed. Thus, during the active time period, the sound control part 335 plays the time signal sound when the measured time reaches a preset time (for example, on the hour). Furthermore, in the present embodiment, the light emission processing is executed during the active time period. Thus, during the active time period, the light emission control part 337 causes the light emitter 13 to emit light when the above-mentioned light emission condition is satisfied.

In the present embodiment, during the active time period, an image is generated in accordance with the output of the object sensor 21, and the image is displayed on the display 11. Thus, it is possible to inform the user whether the user is correctly detected based on the output of the object sensor 21.

The sleep time period from time t₁ determined in accordance with the scheduled bedtime to time t₃ determined in accordance with the alarm time is the time period during which the user should go to bed. Thus, during this sleep time period, it is necessary not to encourage movement of the user or other people around the sleeping user. However, when the sensor response image generation processing is performed, an image in accordance with the output of the object sensor 21 is displayed on the display 11, which may encourage the user who is going to sleep or other people around the user to move, thereby disturbing the sleep of the user. Conversely, in the present embodiment, since the sensor response image generation processing is not performed and the fixed image generation processing is performed during the sleep time period, movement of the user or other people around the user is suppressed during this time period, whereby disturbance of the sleep of the user is suppressed.

If a time signal sound is played or the light emitter 13 emits light during the sleep time period, the sleep of the user may be disturbed. Since the time signal playback processing and the light emission processing are stopped during the sleep time period in the present embodiment, the sleep of the user is prevented from being disturbed.

The sleep time period during which the fixed image generation processing is executed only has to be a time period including a time before time t₃ determined in accordance with the alarm time. Thus, the sleep time period may be a time period including a time immediately before the alarm time (i.e., a time period that continues until immediately before the alarm time). The sleep time period may be a time period that does not include time t₁ determined in accordance with the scheduled bedtime. Thus, the sleep time period may be a time period from an arbitrary time after time t₁ determined in accordance with the scheduled bedtime to time t₃ determined in accordance with the alarm time. Alternatively, the sleep time period may be a time period from an arbitrary time before time t₁ determined in accordance with the scheduled bedtime to time t₃ determined in accordance with the alarm time. Alternatively, when the scheduled bedtime is not set, the sleep time period may be a time period from a time when the alarm time is set by the setting part 332 by user input to a time determined in accordance with the alarm time. Alternatively, the sleep time period may be a time period from a time determined in accordance with the scheduled bedtime until the end of the reached timing processing executed when the alarm time is reached. Alternatively, the sleep time period may be a period during which an alarm set for playing an alarm sound at a time determined by the alarm time is turned on.

The active time period in which the sensor response image generation processing is executed only has to be a time period different from the sleep time period. Thus, the active time period may be all time periods except the sleep time period, or may be a part of the time periods except the sleep time period. Alternatively, if the sleep time period is a period during which the alarm set is turned on, the active time period may be a period during which the alarm set is turned off. The sensor response image generation processing may not be executed during the entire active time period, but may be executed during a part of the active time period. For example, the sensor response image generation processing may be stopped during the playback of the time signal sound even during the active time period. At this time, the image generation part 336 may generate a time signal image that is unrelated to the output of the object sensor 21.

### <<Image Generation Processing>>

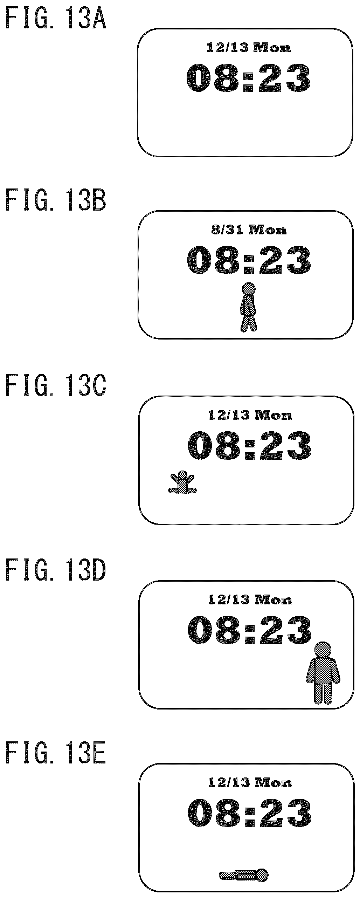

Next, the image generation processing will be described with reference to FIGS. 12 to 13E. FIG. 12 is a view similar to FIG. 4, schematically showing the detection area by the object sensor 21 when the stationary device 1 is installed next to the bed B. FIGS. 13A to 13E are views showing states in which the image generated by the image generation part 336 in the image generation processing is displayed on the display 11. In the example shown in FIGS. 13A to 13E, a date and time image including the date, day of the week, and time, and a character image are displayed on the display 11. The date and time image is an image that does not change in accordance with the output of the object sensor 21.

First, generation of an image by the image generation part 336 during sensor response image generation processing will be described. In the sensor response image generation processing, the image generation part 336 generates an image in accordance with the output of the object sensor 21. In the present embodiment, the image generation part 336 generates an image in accordance with the position and movement of an object detected by the detection part 333 based on the output of the object sensor 21. In particular, in the present embodiment, the image generation part 336 generates an object image such as a character image or a car the position or movement of which changes in accordance with the position or movement of the object detected by the detection part 333.

In the present embodiment, in the sensor response image generation processing, when the position of an object is detected in the response motion display area E by the detection part 333, the image generation part 336 generates an image in accordance with the position of the detected object. The image generation part 336 may generate an image such that the position of the character image or object image in the left-right direction of the display 11 (the position of the character image or object image in the generated image) changes in accordance with the position of the object of the response motion display area E in the circumferential direction. For example, when the position of the object is detected in the center of the response motion display area E in the circumferential direction, the image generation part 336 generates an image such that the character image or object image is displayed in the center of the display 11. Thus, for example, when an object is detected in position b of FIG. 12, the character image is displayed in the center of the display 11 as shown in FIG. 13B. Conversely, for example, when the position of the object is detected on one side of the center of the response motion display area E in the circumferential direction, the image generation part 336 generates an image such that the character image or object image is displayed on the side corresponding to the one side in the left-right direction from the center of the display 11. Thus, for example, when an object is detected at positions c and d in FIG. 12, the character image is displayed at a position shifted to the left or right from the center of the display 11, as shown in FIG. 13C and FIG. 13D, respectively.

Furthermore, the image generation part 336 may generate an image such that the size of the character image or object image displayed on the display 11 changes depending on the distance from the object sensor 21 to the position of the object in the response motion display area E. For example, when the position of the object is detected distant from the object sensor 21 in the radial direction in the response motion display area E, the image generation part 336 generates an image such that the character image or object image is displayed small on the display 11. Thus, for example, when an object is detected at position c in FIG. 12, the character image is displayed relatively small on the display 11 as shown in FIG. 13C. Conversely, for example, when the position of the object is detected near the object sensor 21 in the radial direction in the response motion display area E, the image generation part 336 generates an image such that the character image or object image is displayed large on the display 11. Thus, for example, when an object is detected at position d in FIG. 12, the character image is displayed relatively large on the display 11 as shown in FIG. 13D. Alternatively, the image generation part 336 may generate an image such that a number representing the distance from the object sensor 21 to the position of the object within the response motion display area E is displayed on the display 11.

Conversely, in the sensor response image generation processing, if the detection part 333 does not detect the position of an object in the response motion display area E, the image generation part 336 generates a stationary image that does not change. For example, in this case, the image generation part 336 generates an image that does not include a character image or an object image. Thus, for example, if an object is detected at position a1 or a2 in FIG. 12, the character image is not displayed on the display 11 as shown in FIG. 13A.

In the present embodiment, in the sensor response image generation processing, the image generation part 336 generates an image in accordance with the movement of an object detected by the detection part 333 within the response motion display area E. For example, the image generation part 336 generates an image which changes depending on whether a movement equal to or greater than the baseline movement level is detected by the detection part 333. The image generation part 336 generates an image which changes depending on whether a movement equal to or greater than the baseline movement level detected by the detection part 333 is detected as moving in the circumferential direction within the response motion display area E.

Specifically, for example, when the detection part 333 detects a movement below the baseline movement level or when no movement of an object is detected, the image generation part 336 generates a stationary character image or object image. Thus, for example, when a stationary object is detected at position d in FIG. 12, a character image that is standing still is displayed on the display 11 as shown in FIG. 13D. In this case, a stationary animation (for example, a motion in which the character peers forward, a motion in which the character sits down, etc.) may be played once every few seconds. As a result, the user can understand that the stationary state of the user has been detected.

Furthermore, when the detection part detects a movement equal to or greater than the baseline movement level, the image generation part 336 generates several frames of character images or object images that are moving. In particular, when the detection part detects that the detected movement equal to or greater than the baseline movement level is moving in the circumferential direction, the image generation part 336 generates a character image or object image that is moving in the left-right direction. Thus, for example, when a large movement of an object moving in the circumferential direction is detected at position b in FIG. 12, a character image walking in the left-right direction is displayed on the display 11 as shown in FIG. 13B. Conversely, when the detection part detects that the detected movement equal to or greater than the baseline movement level is not moving in the circumferential direction, the image generation part 336 generates a character image or object image that is moving in place (for example, jumping). Thus, for example, when an object making a large movement in place is detected at position c in FIG. 12, a character image that is jumping is displayed on the display 11 as shown in FIG. 13C.

In the present embodiment, the image generation part 336 generates an image such that the image is switched in a first manner when an object detected by the detection part 333 in the response motion display area E is detected in the detection area of the object sensor 21 but outside the response motion display area E. For example, when a large movement of an object moving in a radial direction away from the response motion display area E is detected at position f in FIG. 12, in the present embodiment, the image generation part 336 generates a character image or object image that moves away when switching from an image including a character to an image not including the character.

Conversely, in the present embodiment, when an object detected by the detection part 333 in the response motion display area E is not detected outside the response motion display area E in the detection area of the object sensor 21 and is no longer detected in the detection area of the object sensor 21, the image generation part 336 generates an image such that the image is switched in a second manner. For example, when a large movement of an object moving in the circumferential direction away from the response motion display area E is detected in position g in FIG. 12, in the present embodiment, the image generation part 336 does not generate a character image or an object image in particular when switching from an image including a character to an image not including the character. Thus, the character image or object image displayed on the display 11 suddenly stops being displayed at the left end or right end of the display 11.

Since an image in accordance with the position of the object detected by the detection part 333 is generated in the present embodiment, the user can understand whether the position of the object is appropriately recognized by the object sensor 21. Note that the image generation part 336 may generate an image regardless of the position of the object detected by the detection part 333.

In the present embodiment, the image generated by the image generation part 336 when the position of the object is detected in the response motion display area E by the detection part 333 is different from the image generated by the image generation part 336 when the position of the object is not detected in the response motion display area E by the detection part 333. As a result, the user can understand whether the response motion display area E is set appropriately. In particular, since the response motion display area E is set based on the area where the bed B is positioned, which is set based on user input, the user can understand whether the area where the bed B is positioned is set appropriately by the object sensor 21. Note that the image generation part 336 may generate any image as long as different images are generated when the position of the object is detected in the response motion display area E and when the position of the object is not detected in the response motion display area E.

Furthermore, in the present embodiment, the image generated by the image generation part 336 when the detection part 333 detects a movement equal to or greater than the baseline movement level is different from the image generated by the image generation part 336 when the detection part 333 does not detect a movement equal to or greater than the baseline movement level. As a result, the user can understand whether the detection part 333 has detected a movement equal to or greater than the baseline movement level. In particular, as described above, when the state of the stationary device 1 is in the alarm sound playback state and a movement equal to or greater than the baseline movement level is detected, the volume of the alarm sound can be reduced or the playback of the alarm sound can be stopped. Thus, the user can understand how much movement is required to reduce the volume of the alarm sound or stop the playback of the alarm sound.

In the present embodiment, the manner in which the image is switched differs between the case in which an object that was detected in the response motion display area E is detected in the detection area of the object sensor 21 but outside the response motion display area E, and the case in which the object is no longer detected in the detection area of the object sensor 21. As a result, the user can understand whether the object has moved into or out of the detection area of the object sensor 21 when the object moves out of the response motion display area E.

Next, generation of an image by the image generation part 336 in the fixed image generation processing will be described. As described above, in the fixed image generation processing, the image generation part 336 generates an image regardless of the output of the object sensor 21. In particular, in the present embodiment, the image generation part 336 generates a stationary image that does not change. For example, as shown in FIG. 13E, the image generation part 336 continues to display a lying character image without changing. Note that, in the fixed image generation processing, the image generation part 336 may generate a changing image as long as the image is independent of the output of the object sensor 21. For example, the image generation part 336 may generate an image which changes in accordance with the passage of time.

### <<Processing Flow>>

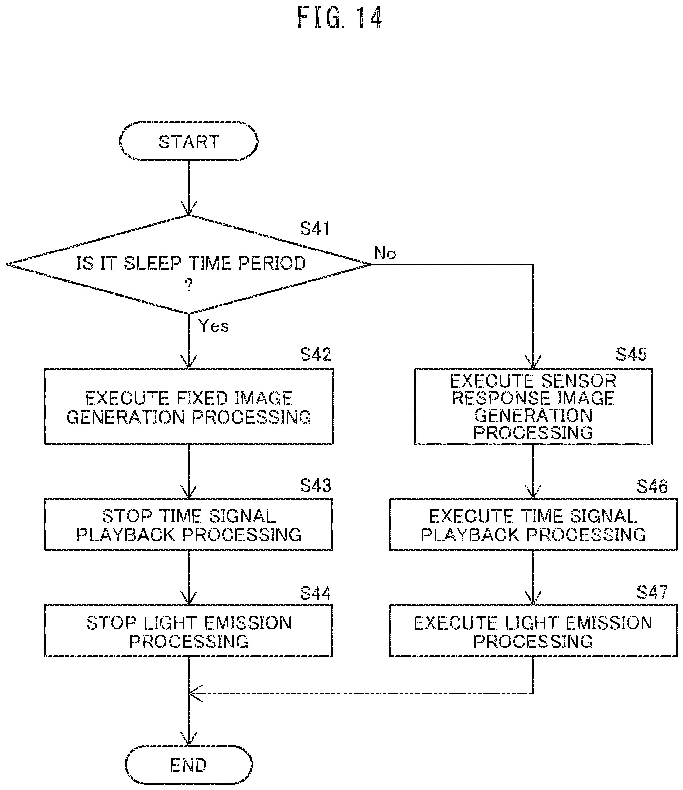

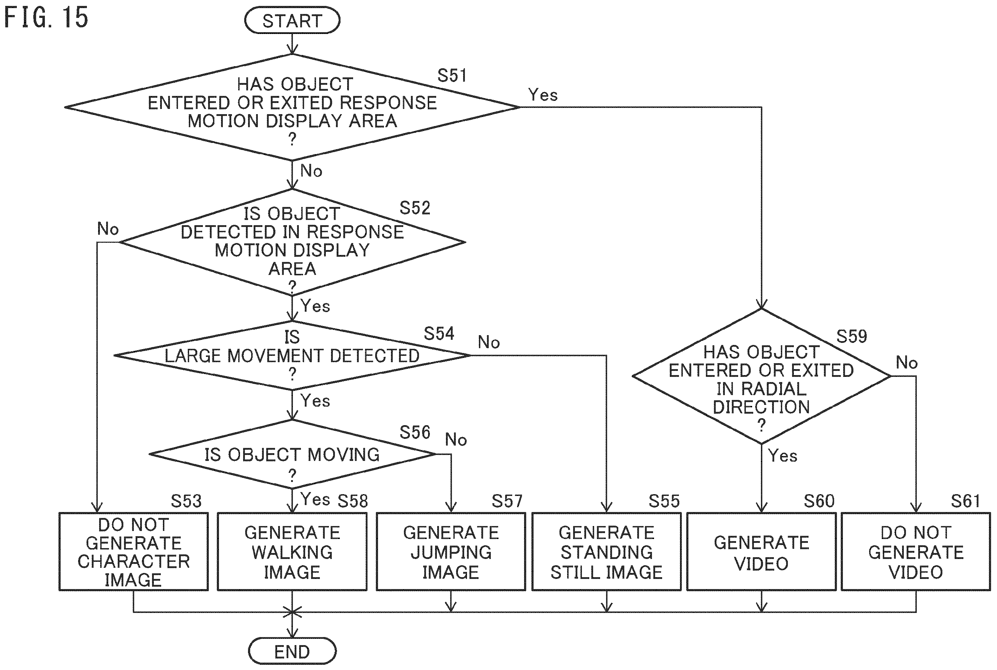

Next, the processing flow relating to image generation processing, time signal playback processing, and light emission processing will be described with reference to FIGS. 14 and 15. FIG. 14 is a flow chart schematically showing the execution processing flow for executing the image generation processing, time signal playback processing, and light emission processing. The processing shown in FIG. 14 is executed by the processor 33.

When execution processing is started, first, the determination part 334 determines whether the current time period is the sleep time period (step S41). In the present embodiment, the determination part 334 determines whether the current time period is between the time determined in accordance with a scheduled bedtime and the time determined in accordance with an alarm time. If the current time period is determined to be the sleep time period in step S41, the image generation part 336 executes the fixed image generation processing (step S42), the sound control part 335 stops the time signal playback processing (step S43), and the light emission control part 337 stops the light emission processing (step S44). Conversely, if the current time period is determined not to be the sleep time period in step S41, the image generation part 336 executes the sensor response image generation processing (step S45), the sound control part 335 executes the time signal playback processing (step S46), and the light emission control part 337 executes the light emission processing (step S47).

FIG. 15 is a flowchart schematically showing the flow of the sensor response image generation processing. The sensor response image generation processing shown in FIG. 15 is executed by the processor 33.

When the sensor response image generation processing starts, first, the determination part 334 determines whether an object has entered or left the response motion display area E (step S51). Specifically, the determination part 334 determines whether a movement such as that indicated by positions f and g in FIG. 12 has been detected. When it is determined in step S51 that an object has not entered or left the response motion display area E, the determination part 334 determines whether an object has been detected in the response motion display area E (step S52). When it is determined in step S52 that an object has not been detected, the image generation part 336 does not generate a character image (step S53).

When it is determined in step S52 that an object has been detected, the determination part 334 determines whether a large movement equal to or greater than the baseline movement level has been detected (step S54). When it is determined in step S54 that a large movement has not been detected, the image generation part 336 generates a character image of the character standing still (step S55). When it is determined in step S54 that a large movement has been detected, the determination part 334 determines whether the large movement is moving in the circumferential direction (step S56). When it is determined in step S56 that the large movement is not moving, the image generation part 336 generates a character image of the character jumping (step S57). Conversely, when it is determined in step S56 that the large movement is moving, the image generation part 336 generates a character image of the character walking (step S58).

When it is determined in step S51 that entry and exit of an object has been detected, the determination part 334 determines whether the object has entered and exited the response motion display area E by radial movement (step S59). When it is determined in step S59 that the object has entered and exited by radial movement (if there has been a movement indicated by position f in FIG. 12), the image generation part 336 generates a moving image (for example, a character image moving away) (step S60). Conversely, if it is not determined in step S59 that the object has entered and exited by radial movement, the image generation part 336 does not generate a moving image (step S61).

### <<Modification Example>>

Next, a modification example of image generation processing will be described.

In a modification example, in the sensor response image generation processing, the image generation part 336 may generate different images depending on whether the position of the object detected by the detection part 333 is within the bed-entering determination area C or outside the bed-entering determination area C. For example, the image generation part 336 generates a character image of a character on a bed when the position of the object detected by the detection part 333 is within the bed-entering determination area C. Furthermore, the image generation part 336 generates a character image of a character beside a bed when the position of the object detected by the detection part 333 is outside the bed-entering determination area C. As a result, the user can understand in what position the user need be in order to be determined as located within the bed-entering determination area C.

In another modification example, when the position of the object is detected by the detection part 333 in an area within a predetermined lower limit distance (for example, 15 cm) from the object sensor 21, the image generation part 336 may not perform sensor response image generation processing even during the active time period. Thus, when the position of the object is detected by the detection part 333 in an area within the predetermined lower limit distance (for example, 15 cm) from the object sensor 21, the image generation part 336 may not generate an image in accordance with the output of the object sensor 21. In this case, the image generation part 336 may generate an image unrelated to the output of the object sensor 21, or may substantially not generate an image as shown in FIG. 13A. As a result, inappropriate images can be prevented from being displayed when the distance from the object sensor 21 to the position of the object is excessively close and the detection by the detection part 333 is not performed correctly.

### Checking of Detection State

As described above, whether the detection part 333 detects a large movement in the bed-entering determination area C and whether the detection part 333 detects a small movement are used for determining the state of the stationary device 1. In particular, whether the in-area presence condition and the presence presumption condition are satisfied (i.e., whether the presence condition is satisfied) is used to determine whether to play the alarm sound.

As described above, it is assumed that when the user makes a large movement (for example, sitting up, rolling over, moving arms and legs, etc.) in the bed-entering determination area C, the detection part 333 detects a large movement equal to or greater than the baseline movement level in the bed-entering determination area C. Likewise, it is assumed that when the user makes a small movement (for example, breathing, etc.) on the bed B near the object sensor 21, the detection part 333 detects a small movement less than the baseline movement level near the object sensor 21. Thus, detecting a large movement in the bed-entering determination area C or a small movement near the object sensor 21 while the user is not in the bed-entering determination area C or near the object sensor 21 could cause the alarm sound to be inappropriately played or stopped.

For example, when air is being blown onto the bed B by an air conditioning device such as an electric fan, the fan may oscillate or the futon may move, resulting in large or small movements, even if the user is not on the bed B. In such a case, even though the user is not on the bed B, a large movement may be detected within the bed-entering determination area C, or a small movement may be detected near the object sensor 21, but this may go unnoticed by the user.

Thus, in the present embodiment, when the user wishes, state check processing for determining whether the detection state by the detection part 333 is normal. In particular, in the present embodiment, the state check processing determines whether a large movement is detected in the bed-entering determination area C or a small movement is detected near the object sensor 21 even though the user should not be in the bed-entering determination area C or near the object sensor 21. Further, in the state check processing, when a large movement is detected in the bed-entering determination area C or a small movement is detected near the object sensor 21 even though the user should not be in the bed-entering determination area C or near the object sensor 21, the detection state is determined to be an abnormal state. Conversely, in the state check processing, when a large movement is not detected in the bed-entering determination area C and a small movement is not detected near the object sensor 21, the detection state is determined to be a normal state.

### <<Examples of Check Control Processing>>

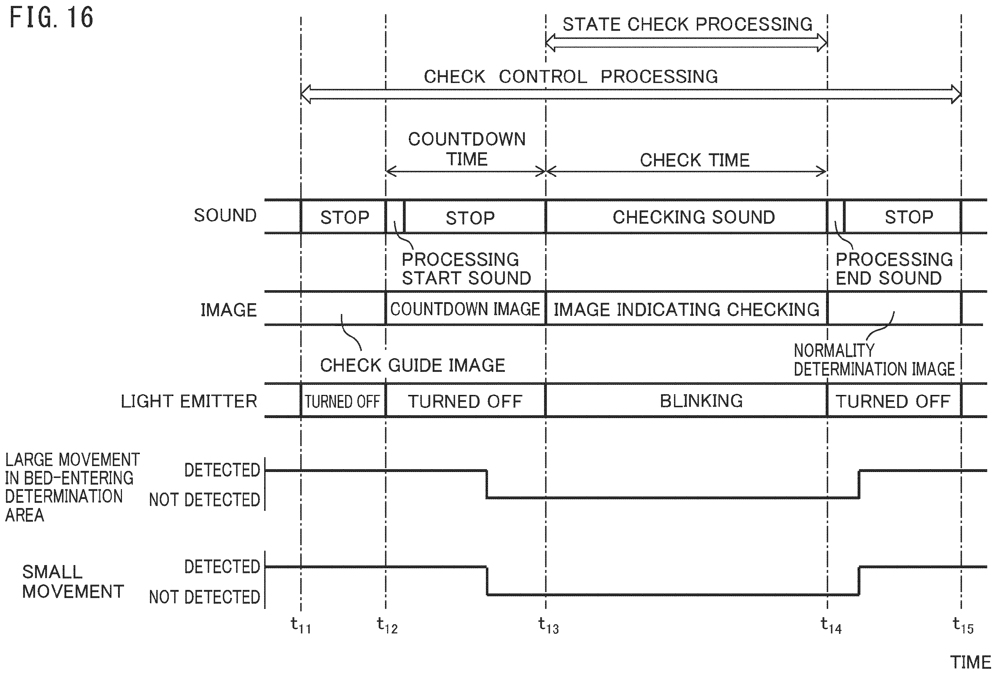

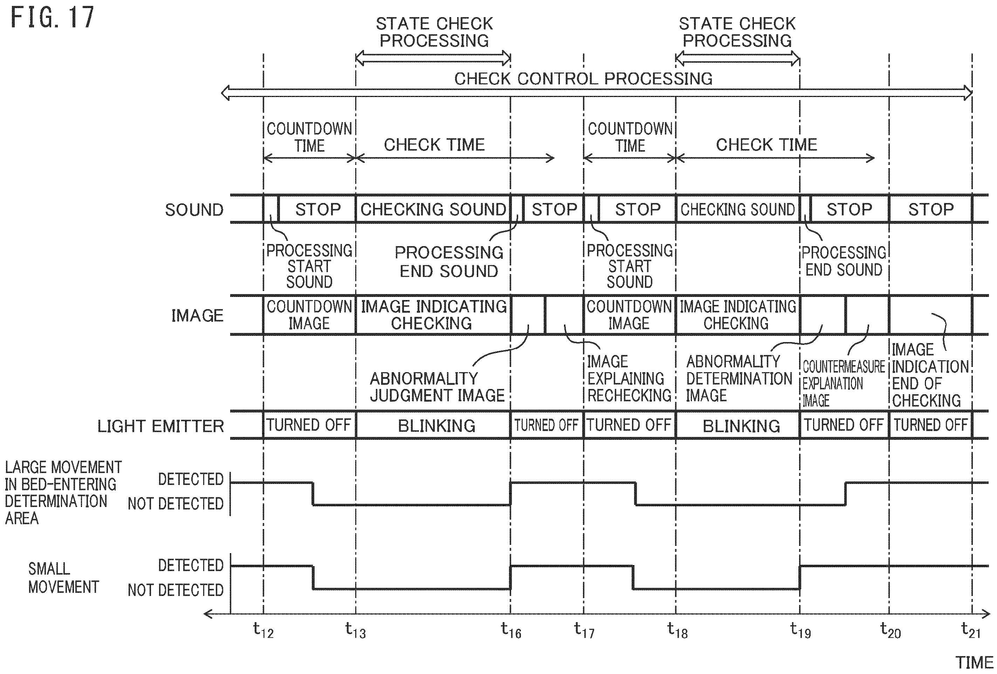

A specific example of check control processing including state check processing will be described with reference to FIGS. 16 and 17. Check control processing is started when a user inputs an indication that they wish to execute state check processing, and is ended after state check processing is completed and the result is notified to the user. FIGS. 16 and 17 are time charts of the operations of the sound control part 335 and the like and the detection status during execution of check control processing. In particular, FIGS. 16 and 17 are time charts of the sound played by the sound control part 335, the image generated by the image generation part 336, the light emission state of the light emitter 13 by the light emission control part 337, and the movement detected by the detection part 333.

FIG. 16 is a time chart when the detection state is determined to be the normal state in state check processing. In the example shown in FIG. 16, at time t₁₁, the user inputs an instruction to execute state check processing. The user inputs an instruction to execute the check by operating, for example, the operation part 20. When the user inputs an instruction to execute the check at time t₁₁, the check execution part 338 starts check control processing.

The check control processing may be started at a time other than when the user inputs an instruction for checking. For example, the check control processing may be started when the stationary device 1 is started for the first time and initial setting is performed. The check control processing may also be started when new information regarding the bed B (such as the relative positional relationship of the stationary device 1 to the bed B) is input via the operation part 20, for example, when the user changes the installation position of the stationary device 1 or replaces the bed B with one of a different size.

The check control processing is started at time t₁₁, first, the image generation part 336 generates a check guide image, and the check guide image is displayed on the display 11. The check guide image may include a message that explains an overview of the state check processing that is about to be started. For example, the check guide image may include a message that a check will be made to see if there is any movement in the bed-entering determination area C. Furthermore, the check guide image may include a leaving message that encourages the user to leave the area including the bed-entering determination area C. For example, the check guide image may include a message that the user needs to stay equal to or greater than 3.5 m away from the stationary device 1 during the execution of state check processing. Alternatively, the check guide screen may include a message that the user should not approach the stationary device 1 during the playback of the checking sound that is played during the execution of the state check processing. The check guide image may be displayed all at once on the display 11, or may be displayed in a series of parts in order to be switched each time the user operates the operation part 20.

Furthermore, when check control processing is started at time t₁₁, the check execution part 338 may prompt the user to input the relative positional relationship of the stationary device 1 relative to the bed B and the distance from the stationary device 1 to the bed B. As a result, when the user inputs the relative positional relationship and the distance to the bed B, the setting part 332 sets the area where the bed B is positioned based on the input relative positional relationship and distance to the bed B. In this manner, the area where the bed B is positioned is set immediately before the start of state check processing, thereby preventing the detection state from being erroneously determined due to the area where the bed B is positioned being erroneously set.

In the present embodiment, when check control processing is started, first, a check guide image is generated and displayed on the display 11. However, the check guide image need not be generated, and need not be displayed on the display 11. In this case, as soon as check control processing is started, operations after time t₁₂, which will be described later, are performed.

In the example shown in FIG. 16, thereafter, at time t₁₂, the user makes an input indicating consent to the start of state check processing. The input indicating such consent is made, for example, by the user operating the operation part 20.

In the present embodiment, when an input indicating consent to the start of state check processing is made at time t₁₂, the sound control part 335 plays a processing start sound indicating that state check processing will start thereafter. The processing start sound is a sound effect. For example, the processing start sound is a voice message indicating that state check processing will start after a predetermined countdown time (for example, 10 seconds). Note that the sound control part 335 may not play the processing start sound even if an input indicating consent to the start of state check processing is made at time t₁₂.

In the present embodiment, when an input indicating consent to start state check processing is performed at time t₁₂, a countdown image indicating the remaining time until the start of state check processing is generated by the image generation part 336, and this countdown image is displayed on the display 11. The generation of the countdown image is performed for a predetermined countdown time from time t₁₁. The countdown image is, for example, an image indicating the remaining time until the start of state check processing.

In the present embodiment, the sound control part 335 does not play any sounds other than the processing start sound until the countdown time has elapsed from time t₁₂. However, the sound control part 335 may play a sound indicating the remaining time until state check processing starts.

In the example shown in FIG. 16, at time t₁₃ when the countdown time has elapsed from time t₁₂, the check execution part 338 starts state check processing. Thus, in the present embodiment, the check execution part 338 starts state check processing after the countdown time has elapsed since the check guide screen was displayed on the display 11. Since the state check processing is not started until the countdown time has elapsed since the check guide screen was displayed in this manner, the user can move away from the stationary device 1 during that time. As a result, it is possible to prevent the detection state from being erroneously determined to be an abnormal state since the user cannot move away from the stationary device 1.

In the present embodiment, the check execution part 338 determines whether the detection state is a normal state based on whether the normality determination condition is satisfied in the state check processing. The check execution part 338 determines that the detection state is a normal state when the normality determination condition is satisfied, and determines that the detection state is an abnormal state when the normality determination condition is not satisfied.

In the present embodiment, the normality determination condition is a condition which is satisfied if the presence condition has never been determined as being satisfied by the determination part 334 from the start of state check processing until a predetermined check time (for example, 20 seconds) has elapsed. Thus, the normality determination condition is a condition that is not satisfied if the presence condition has been determined as being satisfied by the determination part 334 even once from the start of state check processing until the predetermined check time has elapsed.

The presence condition is a condition which is satisfied when it is determined by the determination part 334 that either the in-area presence condition or the presence presumption condition is satisfied. However, the presence condition may be a condition which is satisfied when at least one of the in-area presence condition and the outside-area presence condition is satisfied. Alternatively, the presence condition may be a condition which is satisfied when the in-area presence condition is satisfied. Alternatively, the presence condition may be another condition the satisfaction of which is determined based on the detection by the detection part 333 of at least one of a large movement and the position thereof and a small movement.

Thus, the normality determination condition is satisfied when, from the start of state check processing until the elapse of the predetermined check time, the detection part 333 detects neither a large movement (movement equal to or greater than the baseline movement level) nor a small movement (movement below the baseline movement level) in the bed-entering determination area C. Conversely, the normality determination condition is not satisfied when the detection part 333 detects at least one of a large movement (movement equal to or greater than the baseline movement level) and a small movement (movement below the baseline movement level) in the bed-entering determination area C at least once during the predetermined check time from the start of state check processing.

In the present embodiment, the normality determination condition is determined to be satisfied only if the presence condition has never been determined to be satisfied over the predetermined check time. Thus, the detection state is prevented from being erroneously determined to be a normal state due to the normality determination condition being erroneously determined to be satisfied.

In the present embodiment, the detection state is determined to be in the normal state when the presence condition is not satisfied, i.e., when no large movements and no small movements are detected in the bed-entering determination area C. Thus, in the present embodiment, when determining whether the detection state is in the normal state, whether a large movement is detected in the bed-exit determination area D is not taken into consideration, and thus, whether the presence condition for stopping the alarm sound is satisfied (whether the absence presumption condition shown in C13 of FIG. 5 is satisfied) can more accurately be determined.

The normality determination condition may be any other condition involving the presence condition not being satisfied. For example, the normality determination condition may be a condition which is satisfied if the presence condition is not satisfied for any period of time (shorter than the check time) during the predetermined check time.

The image generation part 336 generates an image indicating that the state check processing is being executed while the state check processing is being executed. Thus, while the state check processing is being executed, an image indicating that the state check processing is being executed is displayed on the display 11. As a result, the user can understand that the state check processing is being executed.

Furthermore, the sound control part 335 plays a checking sound during execution of the state check processing. Thus, the sound control part 335 plays the checking sound from when the state check processing starts to when the state check processing ends. The checking sound is, for example, music. However, the checking sound may be a sound effect that is played continuously.

Furthermore, during execution of the state check processing, the light emission control part 337 blinks the light emitter 13. Thus, the light emission control part 337 blinks the light emitter 13 from the start of the state check processing to the end of the state check processing.

While the state check processing is being executed, it is necessary that the user be distant from the stationary device 1. Thus, while the state check processing is being executed, there is a possibility that the user cannot see the display 11 of the stationary device 1. In the present embodiment, at the start and end of the state check processing, the checking sound is played, and the light emitter 13 is illuminated. Thus, even if the user cannot see the display 11, the user can understand the start and end of the state check processing.

The sound control part 335 is simply required to play sound when starting state check processing and when ending state check processing. Thus, the sound control part 335 may stop playing sound except when starting state check processing (a predetermined time before or after the start of state check processing) and when ending state check processing (a predetermined time before or after the end of state check processing). Alternatively, the sound control part 335 may not play sound when starting state check processing and when ending state check processing. Likewise, the light emission control part 337 is simply required to cause the light emitter 13 to emit light when starting state check processing and when ending state check processing. Thus, the light emission control part 337 may stop emitting light from the light emitter 13 except when starting state check processing (a predetermined time before or after the start of state check processing) and when ending state check processing (a predetermined time before or after the end of state check processing). Alternatively, the light emission control part 337 may not cause the light emitter 13 to emit light when starting state check processing and when ending state check processing.

In the example shown in FIG. 16, from time t₁₃, when state check processing is started, to time t₁₄, when the check time has elapsed, the detection part 333 detects neither a large movement nor a small movement in the bed-entering determination area C. Thus, in the example shown in FIG. 16, the check execution part 338 determines that the detection state is a normal state because the normality determination condition is satisfied at time t₁₄.

When it is determined that the detection state is the normal state at time t₁₄, the state check processing is ended. In response to this, the sound control part 335 plays a processing end sound indicating that the state check processing ends. The processing end sound is a sound effect. For example, the processing end sound is a voice message indicating that the state check processing ends. After the processing end sound has been played, the playback of the sound is stopped. Note that the sound control part 335 may not play the processing end sound even if the state check processing ends at time t₁₄. Furthermore, when the state check processing ends at time t₁₄, the light emission control part 337 may temporarily light or blink the light emitter 13. However, when the light emission control part 337 blinks the light emitter 13, it blinks in a manner different from the blinking during the state check processing (for example, by changing the light emission color).

Furthermore, when the detection state is determined to be the normal state at time t₁₄, the image generation part 336 generates a normality determination image indicating that the detection state is the normal state. The normality determination image is, for example, an image including a message indicating that the detection state is the normal state. Specifically, the normality determination image is, for example, an image including a message indicating that no moving objects were found in the bed-entering determination area C. Furthermore, when the detection state is determined to be the normal state at time t₁₄, the light emission control part 337 stops the emission of light from the light emitter 13. Thereafter, when the user makes an input indicating consent to the end of the check at time t₁₅, the check control processing is ended.

FIG. 17 is a time chart showing the case in which the detection state is determined to be an abnormal state in the state check processing. In the example shown in FIG. 17, in the same manner as the example shown in FIG. 16, the user makes an input indicating consent to the start of the state check processing at time t₁₂, and the state check processing starts at time t₁₃.

In the example shown in FIG. 17, at time t₁₆ before the countdown time has elapsed from time t₁₃, the detection part 333 detects a large movement in the bed-entering determination area C. Thus, at time t₁₆, the determination part 334 determines that the presence condition is satisfied, and thus, the check execution part 338 determines that the detection state is an abnormal state since the normality determination condition is no longer satisfied. In the present embodiment, the check execution part 338 ends state check processing at time t₁₆ when the determination part 334 determines that the presence condition is satisfied. Specifically, in the present embodiment, when the determination part 334 determines that the presence condition is satisfied before the check time has elapsed from the start of state check processing, the check execution part 338 ends state check processing before the check time has elapsed from the start of state check processing. By ending state check processing before the check time has elapsed in this manner, state check processing can be ended early and the user can be notified of the results of state check processing early.

When it is determined that the detection state is an abnormal state at time t₁₆ and the state check processing is ended, the processing end sound indicating that the state check processing is ended is played by the sound control part 335. The processing end sound played at this time may be a sound different from that played when the detection state is determined to be a normal state and the state check processing is ended. For example, the processing end sound when the detection state is a normal state may be set as a sound effect for a correct answer, and the processing end sound when the detection state is an abnormal state may be set as a sound effect for an incorrect answer.

Furthermore, when the state check processing is completed at time t₁₆, the light emission control part 337 may temporarily illuminate or blink the light emitter 13. At this time, the light emitter 13 may illuminate or blink in a light emission manner different from that when the detection state is determined to be the normal state and the state check processing is completed. For example, when the detection state is the normal state, the light emitter 13 may illuminate in blue, and when the detection state is the abnormal state, the light emitter 13 may blink in red.

Furthermore, when the detection state is determined to be an abnormal state at time t₁₆, the image generation part 336 generates an abnormality determination image indicating that the detection state is an abnormal state. The abnormality determination image is an image including a message indicating that the detection state is an abnormal state. Specifically, the abnormality determination image is an image including an abnormality determination message, such as a message indicating that a moving object has been found in the bed-entering determination area C, or a message indicating that the stationary device 1 may not operate correctly if left as-is. As a result, the user can understand that the detection state is an abnormal state.

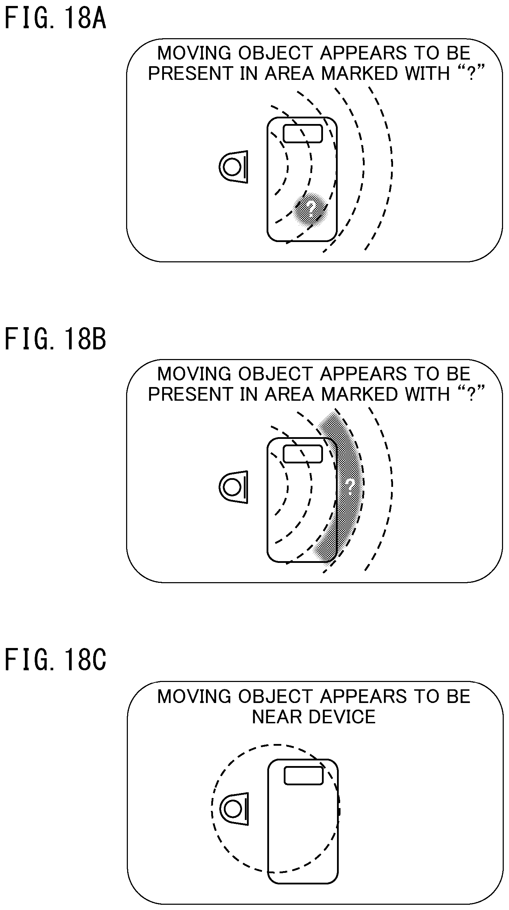

Furthermore, the abnormality determination image is an image including an image related to the detection status of the object based on the detection results of the detection part 333 during the execution of the state check processing. FIGS. 18A to 18C are views showing examples of images related to the detection status of the object. In particular, FIGS. 18A to 18C show images displayed on the display 11.

When, during execution of state check processing, the detection part 333 detects a large movement within the bed-entering determination area C and also detects the position where the large movement is occurring, the image generation part 336 generates an image related to the detection situation of the object in accordance with the position of the object detected by the detection part 333 (the position where the large movement is occurring), as shown in, for example, FIG. 18A. When, during execution of state check processing, the detection part 333 detects a large movement within the bed-entering determination area C but detects the distance to that location rather than the position, the image generation part 336 generates an image related to the detection situation of the object in accordance with the distance to the object detected by the detection part 333, as shown in, for example, FIG. 18B. When the detection part 333 detects a small movement but not a large movement in the bed-entering determination area C during execution of the state check processing, the image generation part 336 generates an image indicating that an object is near the detection part 333 as shown in, for example, FIG. 18C, as an image related to the detection situation of the object. Note that the image generated in this case may be an image which changes in accordance with the detected small movement. Thus, when the detection part 333 detects a small movement without detecting the position of the object and the distance to the object, the image generation part 336 generates an image indicating that a small movement has been detected. By generating an image related to the detection situation of the object and displaying it on the display 11 in this manner, the user can understand what type of detection is being performed by the detection part 333. In particular, in the present embodiment, when a position where a large movement is occurring is detected, since the image generation part 336 generates an image in accordance with the position of the object and displays it on the display 11, the user can easily identify the reason why the movement is determined to be occurring.

Furthermore, the image including the abnormality determination message and the image related to the detection status of the object based on the detection results of the detection part 333 may be displayed all at once on the display 11, or may be displayed in sequence in a plurality of parts so as to be switched each time the user operates the operation part 20.

In the present embodiment, the check execution part 338 executes state check processing again when the first state check processing determines that the detection state is an abnormal state in the check control processing. Thus, the image generation part 336 generates an image explaining that the state check processing will be executed again after generating the abnormality determination image, and the generated image is displayed on the display 11. Thereafter, when the user makes an input indicating consent to the start of the state check processing at time t₁₇, the state check processing is started again at time t₁₈.

In the state check processing, if the determination part 334 determines that the presence condition is satisfied even once, the detection state is determined to be in an abnormal state. Thus, the condition for determining the detection state to be in an abnormal state is relatively strict. In the present embodiment, even if the detection state is determined to be in an abnormal state once in the state check processing, the state check processing can be executed again to carefully determine the detection state. Also, in the present embodiment, if the detection state is determined to be in a normal state in the first state check processing, the check control processing is ended without executing the state check processing again.

The check execution part 338 may not execute the state check processing again even if the detection state is determined to be an abnormal state in the first state check processing. Also, the check execution part 338 may execute the state check processing again even if the detection state is determined to be a normal state in the first state check processing.

In the example shown in FIG. 17, at time t₁₉ before the countdown time has elapsed from time t₁₈, the detection part 333 detects a small movement. Thus, at time t₁₉, the determination part 334 determines that the presence condition is satisfied, and thus, the check execution part 338 determines that the detection state is an abnormal state, and ends the state check processing.

When the detection state is determined to be an abnormal state at time t₁₉, the image generation part 336 generates an abnormality determination image. Thereafter, the image generation part 336 generates an image explaining how to respond to the problem. Specifically, the image generation part 336 generates an image including, for example, a message prompting the user to check whether there is anything moving within the bed-entering determination area C or a message prompting the user to change the installation location of the stationary device 1.

Thereafter, the user is queried as to whether to perform state check processing again, and in the example shown in FIG. 17, the user inputs an indication that it is not necessary to perform state check processing again at time t₂₀. When an input indicating that it is not necessary to perform state check processing again is made in this manner, the image generation part 336 generates a check end image indicating the end of state check processing, and the check end image is displayed on the display 11. Thereafter, when the user makes an input indicating consent to the end of the check at time t₂₁, the check control processing is ended.

In the present embodiment, the check execution part 338 determines the detection state to be a normal state when a normality determination condition, including the presence condition not being satisfied, is satisfied in the state check processing, and determines the detection state to be an abnormal state when the normality determination condition is not satisfied. As a result, the user can understand whether the presence condition is determined to be satisfied by the determination part 334 in the current state. Thus, in accordance with the present embodiment, the user can confirm whether the stationary device 1 can appropriately detect the absence of the user on the bedding. In the present embodiment, the stationary device 1 is a portable device. Thus, when the detection state is determined to be an abnormal state in the state check processing, the user can change the installation position of the stationary device 1.

### <<Processing Flow>>

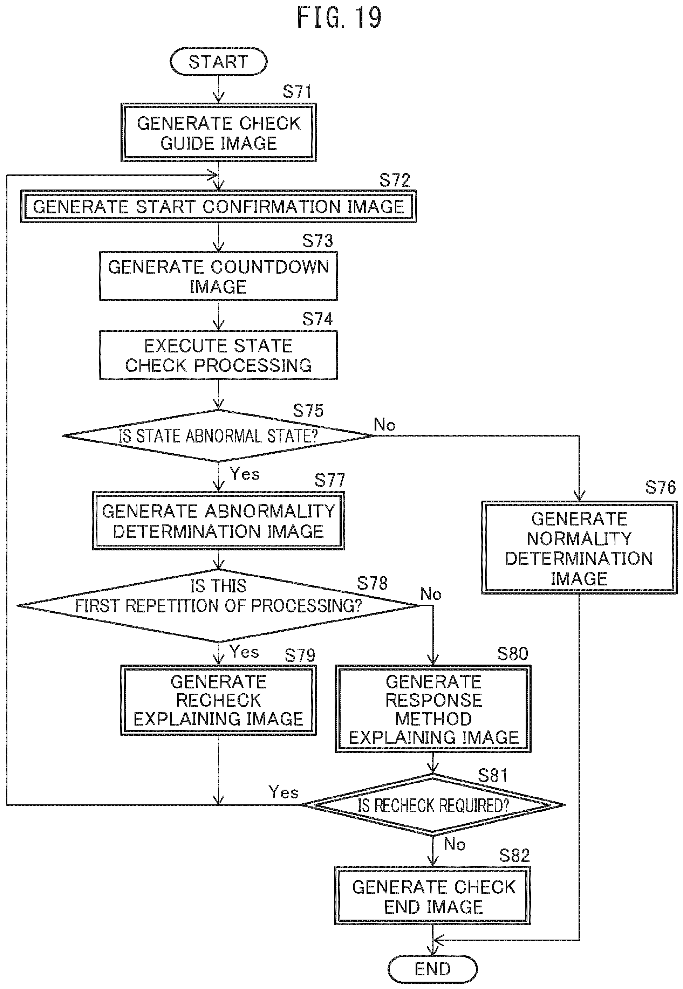

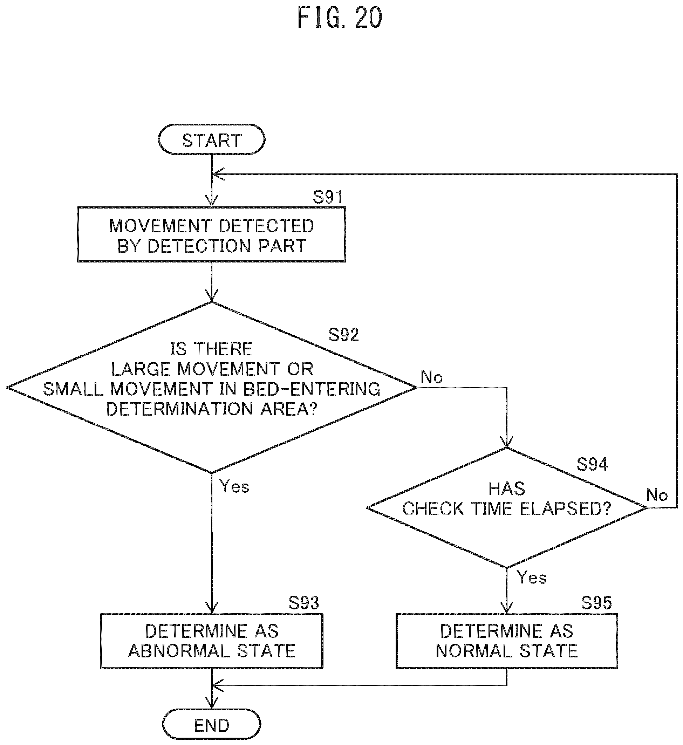

Next, the flow of check control processing will be described with reference to FIGS. 19 and 20. FIG. 19 is a flow chart schematically showing the flow of check control processing. In particular, FIG. 19 is a view schematically showing the flow of image generation by the image generation part 336 in check control processing. In FIG. 19, operations shown in double frames indicate operations which can proceed to the next operation by the user performing an input via the operation part 20. Conversely, in FIG. 19, operations shown in single frames indicate operations which can proceed to the next operation without user input.

As shown in FIG. 19, when check control processing is started, the image generation part 336 first generates a check guide image, and the check guide image is displayed on the display 11 (step S71). When the user performs an operation input such as pressing the operation part 20 (the user makes an input indicating consent to the start of the state check processing) while the check guide screen is displayed on the display 11, the image generation part 336 generates a start confirmation image for confirming whether to agree to start state check processing, and the start confirmation image is displayed on the display 11 (step S72).

When the user performs an operation input (input indicating consent to the start of state check processing) such as pressing the operation part 20 while the start confirmation image is displayed on the display 11, the image generation part 336 generates a countdown image indicating the remaining time until state check processing (step S73). Thereafter, when the countdown time has elapsed since the operation input, the check execution part 338 executes the state check processing shown in FIG. 20 (step S74).

Next, the check execution part 338 determines whether the detection state has been determined to be an abnormal state in the state check processing (step S75). If the detection state is determined not to be an abnormal state in step S75 (if the detection state is determined to be a normal state), the image generation part 336 generates a normality determination image, which is then displayed on the display 11 (step S76). In a state in which the normality determination image is displayed on the display 11, when the user performs an operation input, such as pressing the operation part 20 (an input indicating consent to the end of the check), the check control processing is ended.

Conversely, if the detection state is determined to be an abnormal state in step S75, the image generation part 336 generates an abnormality determination image, and the abnormality determination image is displayed on the display 11 (step S77). When the user performs an operation input, such as pressing the operation part 20 (an input indicating that the user has understood the content of the abnormality determination image) while the abnormality determination image is displayed on the display 11, the check execution part 338 determines whether this execution of state check processing was the first time (step S78).

When it is determined in step S78 that this state check processing was executed for the first time, the image generation part 336 generates a recheck instruction image explaining that the state check processing will be executed again, and the recheck instruction image is displayed on the display 11 (step S79). When the recheck instruction image is displayed on the display 11 and the user performs an operation input such as pressing the operation part 20 (the user makes an input indicating consent to the start of the state check processing), step S72 and the subsequent steps are repeated again.

Conversely, when it is determined in step S78 that the current execution of state check processing is the second or later processing, the image generation part 336 generates a countermeasure explanation image that explains a countermeasure method, and the countermeasure explanation image is displayed on the display 11 (step S80). When the user performs an operation input such as pushing the operation part 20 (input indicating that the content of the countermeasure explanation image is understood) while the countermeasure explanation image is displayed on the display 11, the check execution part 338 determines whether it is necessary to execute state check processing again (step S81). In the present embodiment, the check execution part 338 determines whether it is necessary to execute state check processing based on the operation input by the user via the operation part 20. If the user makes an input indicating that the execution of state check processing again is necessary in step S81, steps S72 and the subsequent steps are repeated again.

Conversely, if the user makes an input indicating that it is not necessary to execute state check processing again in step S81, the image generation part 336 generates a check end image indicating the end of state check processing, and the check end image is displayed on the display 11 (step S82). If the user inputs an operation input such as pressing the operation part 20 in step S82 (an input indicating consent to the end of the check), the check control processing is ended.

FIG. 20 is a flowchart showing the flow of state check processing. The state check processing in FIG. 20 is executed by the processor 33 when the process in the flowchart in FIG. 19 proceeds to step S74.

As shown in FIG. 20, when state check processing is started, the detection part 333 detects movement of the object based on the output of the object sensor 21 (step S91). Next, the determination part 334 determines whether a large movement or a small movement has been detected in the bed-entering determination area C based on the detection results by the detection part 333 (step S92). If a large movement or a small movement has been detected in the bed-entering determination area C in step S92, the check execution part 338 determines that the detection state is an abnormal state (step S93), and the state check processing is ended.

Conversely, when it is determined in step S92 that neither a large movement nor a small movement has been detected in the bed-entering determination area C, it is determined whether a predetermined check time has elapsed since the start of state check processing (step S94). When it is determined in step S94 that the check time has not elapsed, steps S91 and the subsequent steps are repeated again. Conversely, when it is determined in step S94 that the check time has elapsed, the check execution part 338 determines that the detection state is a normal state (step S95), and the state check processing is ended.

Though preferred embodiments according to the present disclosure have been described above, the present disclosure is not limited to these embodiments, and various modifications and changes can be made within the scope of the claims.

## Claims

1. A sound playback device (1), comprising:
a sensor (21), output of which changes in accordance with a position or movement of an object in a detection area including a first area and a second area;
a detection part (333) configured to detect a position of the object based on output of the sensor (21);
a sound control part (335) configured to control playback of sound; and
a determination part (334) configured to determine whether a first condition is satisfied based on detection results which are different than a position of an object detected based on output of the sensor(21), wherein
the sound control part (335) changes a sound playback manner when a second condition, including a position of an object detected in the first area becoming not detected in the first area and a position of an object being detected in the second area, becomes satisfied, and changes a sound playback manner based on satisfaction of a third condition including a position of an object detected in the first area becoming not detected in the detection area and the first condition being determined not to be satisfied.

2. The sound playback device (1) according to claim 1, wherein the sound control part (335) changes a sound playback manner without the determination part (334) determining whether the first condition is satisfied, when the second condition becomes satisfied.

3. The sound playback device (1) according to claim 1 or 2, further comprising a clock part (331) configured to measure time, wherein the sound control part (335):
plays a first sound when time measured by the clock part (331) reaches a time determined in accordance with an alarm time set by a user; and
stops the playback of the first sound when at least one of the second condition and the third condition is satisfied.

4. The sound playback device (1) according to any one of claims 1-3, wherein the detection part (333) detects, as a position of an object, a position where a first movement, which is a movement equal to or greater than an arbitrary magnitude, is detected based on output of the sensor (21).

5. The sound playback device (1) according to claim 4, wherein when the third condition is satisfied after a first period of time has elapsed since a last detection of a position of the object, the sound control part (335) does not change a sound playback manner even if the third condition is satisfied.

6. The sound playback device (1) according to claim 4 or 5, wherein
the detection part (333) detects a presence or absence of a second movement which is smaller than the arbitrary magnitude based on output of the sensor (21), and
the first condition is satisfied when presence of the second movement is detected.

7. The sound playback device (1) according to claim 6, further comprising a clock part (331) configured to measure time, wherein the sound control part (335):
plays a first sound when time measured by the clock part (331) reaches a time determined in accordance with an alarm time set by a user,
stops playback of the first sound when at least one of the second condition and the third condition is satisfied,
when playback of the first sound is stopped due to the third condition being satisfied, resumes playback of the first sound when the second movement is detected before a second period of time has elapsed from when playback of the first sound is stopped, and
when playback of the first sound is stopped due to the second condition being satisfied, does not resume playback of the first sound even if the second movement is detected before a second period of time has elapsed from when playback of the first sound is stopped.

8. The sound playback device (1) according to claim 7, wherein the sound control part (335) does not resume playback of the first sound when the first movement is detected in the second area before the second period of time has elapsed from when playback of the first sound is stopped due to the third condition being satisfied.

9. The sound playback device (1) according to claim 7 or 8, wherein the sound control part (335) resumes playback of the first sound when the first movement is detected in the first area before the second period of time has elapsed from when playback of the first sound is stopped due to the third condition being satisfied.

10. The sound playback device (1) according to any one of claims 7-9, wherein the determination part (334) determines that the object has left the first area when the first movement and the second movement have not been detected until the second period of time has elapsed from when playback of the first sound is stopped due to the third condition being satisfied, and when the second condition is satisfied, and
the sound control part (335) resumes playback of the first sound when the first movement is detected in the first area until a third period of time has elapsed since playback of the first sound was started or since it was determined that the object has left the first area.

11. The sound playback device (1) according to claim 10, wherein the sound control part (335) resumes playback of the first sound when the first movement is detected in the first area before the third period of time has elapsed since it was determined that the object has left, and thereafter the first movement has not been detected for a fourth period of time or more without the second condition or the third condition being satisfied.

12. The sound playback device (1) according to any one of claims 1-11, wherein the sound control part (335) plays a second sound when at least one of a sound playback condition including the second condition being satisfied and a sound playback condition including the third condition being satisfied is satisfied.

13. The sound playback device (1) according to any one of claims 1-11, wherein the sound control part (335):
plays a second sound when a sound playback condition including the second condition being satisfied is satisfied, and
plays a sound different from the second sound when a sound playback condition including the third condition being satisfied is satisfied.

14. The sound playback device (1) according to claim 12 or 13, wherein the detection part (333) detects, as a position of the object, a position where a first movement, which is a movement equal to or greater than an arbitrary magnitude, is detected based on output of the sensor (21), and detects a presence or absence of a second movement which is smaller than the arbitrary magnitude based on output of the sensor (21),
the sound playback condition including the second condition being satisfied is a condition which is satisfied when the second condition is satisfied, and
the sound playback condition including the third condition being satisfied is a condition which is satisfied when the third condition is satisfied and then the first movement and the second movement are not detected until a second period of time has elapsed.

15. The sound playback device (1) according to any one of claims 1-11, further comprising a clock part (331) configured to measure time, wherein
the sound control part (335):
plays a first sound when time measured by the clock part (331) reaches a time determined in accordance with an alarm time set by a user,
stops playback of the first sound when at least one of the second condition and the third condition is satisfied,
plays a fourth sound when at least one of a sound playback condition including the second condition being satisfied and a sound playback condition including the third condition being satisfied is satisfied before a fifth period of time has elapsed from when the first sound was played, and
plays a fifth sound which is different from the fourth sound when at least one of a sound playback condition including the second condition being satisfied and a sound playback condition including the third condition being satisfied is satisfied after the fifth period of time has elapsed from when the first sound was played.

16. The sound playback device (1) according to claim 15, wherein the fourth sound has a longer playback time than the fifth sound.

17. The sound playback device (1) according to any one of claims 1-16, further comprising
a light-emitting part (13) configured to emit light; and
a light emission control part (337) configured to control light emission of the light-emitting part (13), wherein
the light emission control part (337) changes a light emission manner of the light-emitting part (13) when at least one of the second condition and the third condition is satisfied.

18. The sound playback device (1) according to claim 17, wherein the light emission control part (337):
changes a light emission manner of the light-emitting part (13) to a first manner when the second condition is satisfied, and
changes a light emission manner of the light-emitting part (13) to a manner which is different from the first manner when the third condition is satisfied.

19. A sound playback method, comprising:
detecting a position of an object based on output of a sensor (21), output of which changes in accordance with the position or movement of the object in a detection area including a first area and a second area,
determining whether a first condition is satisfied based on detection results different from a position of an object detected based on output of the sensor (21),
changing a sound playback manner when a second condition, including a position of an object detected in the first area becoming not detected in the first area and a position of an object being detected in the second area, is satisfied, and changing a sound playback manner based on satisfaction of a third condition including a position of an object detected in the first area becoming not detected in the detection area and the first condition being determined not to be satisfied.

20. A sound playback program, which causes a computer to execute the steps of:
detecting a position of an object based on output of a sensor (21), output of which changes in accordance with the position or movement of the object in a detection area including a first area and a second area,
determining whether a first condition is satisfied based on detection results different from a position of an object detected based on output of the sensor (21),
changing a sound playback manner when a second condition including a position of an object detected in the first area becoming not detected in the first area and a position of an object being detected in the second area is satisfied, and changing a sound playback manner based on satisfaction of a third condition including a position of an object detected in the first area becoming not detected in the detection area and the first condition being determined not to be satisfied.
